# FASCICULE DE BREVET EUROPEEN

(11) **EP 3 554 886 B1**
(45) Date de publication et mention de la délivrance du brevet: **21.09.2022**
(21) Numéro de dépôt: 17794748.8
(22) Date de dépôt: 09.11.2017
(51) Int. Cl.: H02J 3/14, B60L 53/66

(54) **SYSTÈME ADAPTÉ POUR LA RECHARGE DE VÉHICULES ÉLECTRIQUES**
SYSTEM ZUM LADEN VON ELEKTROFAHRZEUGEN
SYSTEM FOR CHARGING ELECTRIC VEHICLES

(30) Priorité: 19.12.2016 FR 1662726
(43) Date de publication de la demande: 23.10.2019
(73) Titulaire: Electricité de France, 75008 Paris (FR)
(72) Inventeur: BEAUDE, Olivier, 75003 Paris (FR); KADDOUR, Bayram, 91300 Massy (FR); AUGUSTIN, Bertrand, 78000 Versailles (FR); PENNEC, Julien, 91300 Massy (FR); JEANDIN, Alban, 92350 Le Plessis Robinson (FR)
(74) Mandataire: Plasseraud IP
(86) Numéro de dépôt international: PCT/EP2017/078745
(87) Numéro de publication internationale: WO 2018/114127

(56) Documents cités:
- WO-A2-2014/057133
- US-A1- 2013 307 466
- US-A1- 2014 125 280

## Description

Le domaine de l'invention se rapporte à la recharge de véhicules électriques, et en particulier aux systèmes permettant la recharge d'une pluralité de tels véhicules.

Avec l'accroissement du parc de véhicules électriques, les dispositifs configurés pour assurer la recharge de ces véhicules sont eux-mêmes destinés à augmenter substantiellement en nombre. Or, l'emploi de ces dispositifs de recharge peut être très impactant pour le réseau électrique auquel ils sont raccordés.

En effet, la recharge d'un véhicule électrique nécessite une puissance électrique conséquente, notamment au vu de la consommation d'électricité réalisée par les autres usages d'une installation de type résidentiel.

Cet impact est d'autant plus marqué que le nombre de véhicules électriques raccordés au réseau pour leur recharge est grand.

Afin de rendre compte de ce phénomène, ont été développées des approches de recharge dans le cadre desquelles la recharge d'un véhicule électrique donné est considérée conjointement à celle d'autres véhicules.

Toutefois, les approches connues de ce type présentent des inconvénients.

En effet, elles sont globalement rigides, notamment en ce qu'elles limitent la quantité et la nature des phénomènes auxquels la recharge d'un parc de véhicules électriques peut être adossée.

L'invention vise donc à améliorer la situation.

US2013/0307466 A1 divulgue une station de recharge pour voiture comprenant une unité de gestion utilisant des profils de recharge.

À cet effet, l'invention concerne un système adapté pour la recharge de véhicules électriques, le système comprenant :
- une pluralité de dispositifs de recharge respectivement adaptés pour fournir une puissance électrique régulée pour effectuer la recharge en énergie électrique d'au moins un véhicule électrique, les dispositifs de recharge étant destinés à être connectés à un réseau d'alimentation en énergie électrique, chaque dispositif de recharge étant destiné à être connecté audit réseau par l'intermédiaire d'un point de livraison auquel le dispositif de recharge est configuré pour soutirer de l'énergie électrique pour fournir ladite puissance électrique régulée, chaque dispositif de recharge comprenant :
   - un module d'optimisation configuré pour construire un profil de recharge associé à une plage temporelle de recharge et représentatif d'une première puissance électrique de recharge adaptée pour être délivrée par le dispositif de recharge au cours de ladite plage temporelle de recharge pour la recharge du véhicule électrique, et
   - un module de régulation adapté pour réguler la puissance électrique fournie par le dispositif de recharge, le module de régulation comprenant:
      - un premier mode de fonctionnement dans lequel le module de régulation est configuré pour réguler la puissance électrique délivrée en sortie pour faire correspondre ladite puissance électrique à la première puissance électrique de recharge pendant au moins une partie de la plage temporelle de recharge associée, et
      - un deuxième mode de fonctionnement dans lequel il est configuré pour réguler la puissance électrique délivrée en sortie pour la faire correspondre à une deuxième puissance électrique de recharge,
- un dispositif de coordination adapté pour communiquer avec les dispositifs de recharge, le dispositif de coordination étant adapté pour :
   - déclencher une phase d'optimisation coordonnée impliquant un groupe de dispositifs de recharge comprenant tout ou partie des dispositifs de recharge dudit système et au cours de laquelle chaque dispositif de recharge impliqué construit un profil de recharge destiné à être mis en œuvre dans le premier mode de fonctionnement au moins à partir d'une part d'une donnée de recharge individuelle générée par le module d'optimisation correspondant au moins à partir de prévisions de consommation électrique d'autres équipements électriques raccordés au point de livraison correspondant pour la plage de recharge temporelle, et d'autre part d'un signal de coordination généré par le dispositif de coordination à partir des données de recharge individuelles générées par tout ou partie des dispositifs de recharge impliqués, et
   - déclencher à un instant considéré une phase de régulation coordonnée impliquant tout ou partie des dispositifs de recharge du système, au cours de laquelle le module de régulation de chacun desdits dispositifs de recharge impliqués dans la phase de régulation coordonnée met en œuvre le deuxième mode de fonctionnement, la deuxième puissance électrique de recharge correspondante étant déterminée au moins à partir d'une donnée d'état du réseau d'alimentation en énergie électrique déterminée par le dispositif de coordination à partir de mesures représentatives d'un état du réseau effectuées lors d'au moins un intervalle de temps précédent ledit instant considéré.

Selon un aspect de l'invention, au cours de la phase de régulation coordonnée, les dispositifs de recharge impliqués sont configurés pour mettre en œuvre un sous-mode de fonctionnement collectif du deuxième mode de fonctionnement, le deuxième mode de fonctionnement du module de régulation de chaque dispositif de recharge présentant en outre un sous-mode de fonctionnement individuel dans lequel la deuxième puissance électrique de recharge est déterminée indépendamment de ladite donnée d'état du réseau d'alimentation en énergie électrique déterminée par le dispositif de coordination à partir de mesures représentatives d'un état du réseau effectuées lors d'un intervalle de temps précédent ledit instant considéré.

Selon un aspect de l'invention, dans le sous-mode de fonctionnement individuel, le module de régulation est configuré pour déterminer la deuxième puissance électrique de recharge au moins en fonction de données de consommation électrique d'autres équipements électriques raccordés au point de livraison correspondant mesurée au cours de ladite plage temporelle et de la première puissance de recharge du profil de recharge.

Selon un aspect de l'invention, pour les dispositifs de recharge impliqués dans une phase d'optimisation coordonnée et présentant un profil de recharge dont la plage temporelle de recharge inclut l'instant de début de la phase d'optimisation coordonnée, le profil de recharge déterminé lors de la phase d'optimisation coordonnée remplace ledit profil de recharge une fois déterminé.

Selon un aspect de l'invention, le module d'optimisation d'un dispositif de recharge est configuré pour déterminer la donnée individuelle de recharge en outre au moins à partir d'un élément parmi :
- un comportement en recharge d'un dispositif de stockage d'énergie électrique du véhicule électrique que le dispositif de recharge est destiné à recharger,
- un besoin en énergie électrique du dispositif de stockage d'énergie électrique du véhicule électrique pour la recharge dudit dispositif de stockage d'énergie électrique,
- un tarif de l'énergie électrique représentatif d'un coût de l'énergie électrique à fournir au dispositif de stockage d'énergie électrique pour sa recharge,
- un comportement électrotechnique d'un dispositif de protection électrique du point de livraison associé,
- une puissance électrique maximale que le dispositif de recharge est dimensionné pour délivrer.

Selon un aspect de l'invention, pour la phase d'optimisation coordonnée, chaque module de régulation est configuré pour générer le profil de recharge à l'issue d'un processus itératif dont chaque étape intermédiaire comprend la génération d'une donnée de recharge individuelle temporaire, l'envoi de ladite donnée de recharge individuelle temporaire au dispositif de coordination, et la réception d'un signal de coordination temporaire généré par le dispositif de coordination à partir des données de recharge individuelles temporaires des différents dispositifs de recharge impliqués, la donnée de recharge individuelle temporaire étant construite en tant que donnée de recharge individuelle de l'étape précédente mise à jour à partir du signal de coordination temporaire reçu lors de l'étape précédente, le profil de recharge étant construit à partir de la donnée de recharge individuelle construite mise à jour à partir du signal de coordination reçu lors de la dernière étape ou d'une étape intermédiaire, l'étape initiale étant menée à partir de la donnée de recharge individuelle et du signal de coordination.

Selon un aspect de l'invention, le dispositif de coordination est configuré pour générer le signal de coordination au moins à partir d'une estimation de l'impact sur le réseau d'alimentation électrique des données de recharge individuelles des dispositifs de recharge impliqués dans la phase d'optimisation coordonnée.

Selon un aspect de l'invention, le dispositif de coordination est configuré pour générer le signal de coordination au moins à partir de la somme des données de recharge individuelles.

Selon un aspect de l'invention, chaque donnée de recharge individuelle est représentative d'un profil de recharge définissant des valeurs de la première puissance électrique de recharge sur une plage temporelle de recharge.

Selon un aspect de l'invention, le dispositif de coordination est configuré pour déclencher la phase de régulation coordonnée en réponse à la vérification d'au moins une condition dont une condition au moins porte sur une comparaison entre une capacité d'une région du réseau d'alimentation électrique couvrant tout ou partie dudit réseau d'alimentation et une consommation électrique générée par les dispositifs de recharge et les autres équipements électriques raccordés à ladite région.

Selon un aspect de l'invention, les dispositifs de recharge destinés à être impliqués dans ladite phase de régulation coordonnée sont ceux raccordés à ladite région.

Selon un aspect de l'invention, le dispositif de coordination se présente sous la forme d'un dispositif distant des dispositifs de recharge.

Selon un aspect de l'invention, le dispositif de coordination comprend une pluralité de modules de coordination respectivement couplés à l'un des dispositifs de recharge du système, chaque module de coordination étant configuré pour communiquer avec les autres dispositifs de recharge du système et pour fournir le signal de coordination au dispositif de recharge auquel il est associé.

L'invention concerne en outre un procédé de recharge d'une pluralité de véhicules électriques au moyen d'un système comprenant :
- une pluralité de dispositifs de recharge respectivement adaptés pour fournir une puissance électrique régulée pour effectuer la recharge en énergie électrique d'au moins un véhicule électrique, les dispositifs de recharge étant destinés à être connectés à un réseau d'alimentation en énergie électrique, chaque dispositif de recharge étant destiné à être connecté audit réseau par l'intermédiaire d'un point de livraison auquel le dispositif de recharge est configuré pour soutirer de l'énergie électrique pour fournir ladite puissance électrique régulée, chaque dispositif de recharge comprenant :
   - un module d'optimisation configuré pour construire un profil de recharge associé à une plage temporelle de recharge et représentatif d'une première puissance électrique de recharge adaptée pour être délivrée par le dispositif de recharge au cours de ladite plage temporelle de recharge pour la recharge du véhicule électrique, et
   - un module de régulation adapté pour réguler la puissance électrique fournie par le dispositif de recharge, le module de régulation comprenant:
      - un premier mode de fonctionnement dans lequel le module de régulation est configuré pour réguler la puissance électrique délivrée en sortie pour faire correspondre ladite puissance électrique à la première puissance électrique de recharge pendant au moins une partie de la plage temporelle de recharge associée, et
      - un deuxième mode de fonctionnement dans lequel il est configuré pour réguler la puissance électrique délivrée en sortie pour la faire correspondre à une deuxième puissance électrique de recharge,
- un dispositif de coordination adapté pour communiquer avec les dispositifs de recharge,
le procédé comprenant:
- réaliser une phase d'optimisation coordonnée impliquant un groupe de dispositifs de recharge comprenant tout ou partie des dispositifs de recharge dudit système et au cours de laquelle chaque dispositif de recharge impliqué construit un profil de recharge destiné à être mis en œuvre dans le premier mode de fonctionnement au moins à partir d'une part d'une donnée de recharge individuelle générée par le module d'optimisation correspondant au moins à partir de prévisions de consommation électrique d'autres équipements électriques raccordés au point de livraison correspondant pour la plage de recharge temporelle, et d'autre part d'un signal de coordination généré par le dispositif de coordination à partir des données de recharge individuelles générées par tout ou partie des dispositifs de recharge impliqués, et
- réaliser à un instant considéré une phase de régulation coordonnée impliquant tout ou partie des dispositifs de recharge du système, au cours de laquelle le module de régulation de chacun desdits dispositifs de recharge impliqués dans la phase de régulation coordonnée met en œuvre le deuxième mode de fonctionnement, la deuxième puissance électrique de recharge correspondante étant déterminée au moins à partir d'une donnée d'état du réseau d'alimentation en énergie électrique déterminée par le dispositif de coordination à partir de mesures représentatives d'un état du réseau effectuées lors d'au moins un intervalle de temps précédent ledit instant considéré.

L'invention concerne en outre un programme informatique comprenant des instructions pour la mise en œuvre du procédé tel que défini ci-dessus lorsqu'exécutées par un processeur.
- La Figure 1 est une illustration schématique d'un système selon l'invention ;
- La Figure 2 est une illustration schématique d'un dispositif de recharge du système de la Figure 1 ;
- Les Figures 3A et 3B sont des illustrations schématiques de grandeurs considérées au cours d'une plage temporelle de recharge ;
- la Figure 4 est un diagramme-bloc d'un procédé de fonctionnement du système selon l'invention.

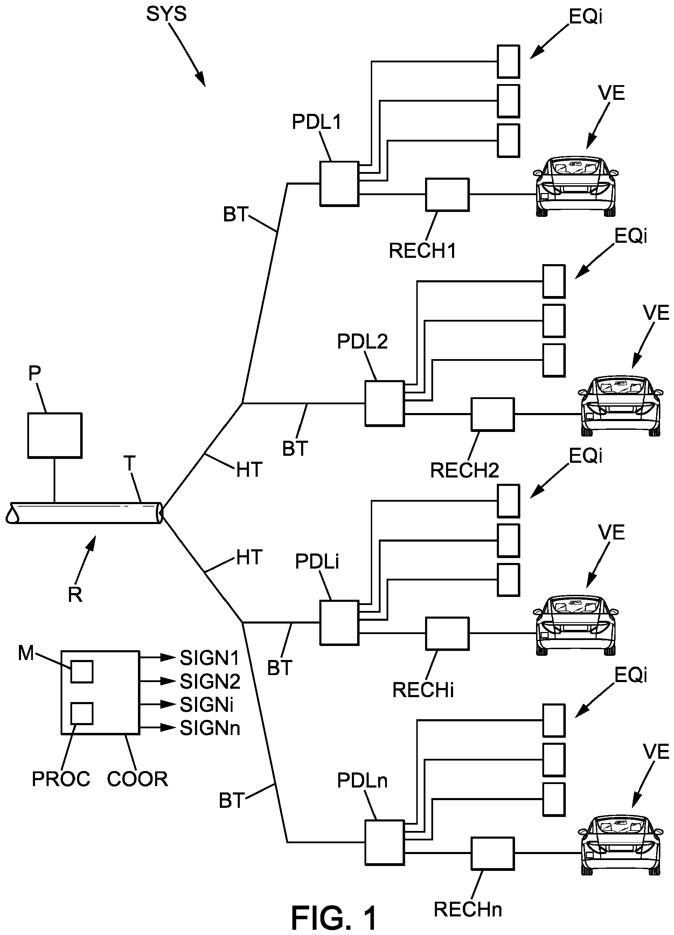

La Figure 1 illustre un système SYS selon l'invention. Le système SYS est adapté pour la recharge de véhicules électriques VE, en particulier pour la recharge simultanée d'une pluralité de véhicules VE.

Chaque véhicule électrique VE est configuré pour assurer au moins sa propulsion en tout ou partie à partir d'énergie électrique. À cet effet, chaque véhicule VE comprend un dispositif de stockage STO pour le stockage d'énergie électrique et la restitution de celle-ci au moins à un bloc de propulsion (non représenté) du véhicule VE assurant la propulsion du véhicule au moins à partir d'énergie électrique. On remarque que cette propulsion peut être également assurée en tout ou partie à partir de carburant de type essence ou diesel. Chaque véhicule comprend en outre une prise adaptée pour être raccordée à une prise de forme complémentaire d'un dispositif de recharge du système SYS décrit ci-après pour le transfert d'énergie électrique entre le véhicule et le dispositif de recharge en question, notamment au moins pour la recharge du dispositif de stockage STO en énergie électrique.

Le système SYS est destiné à être raccordé à un réseau R d'alimentation en énergie électrique via lequel de l'énergie électrique est transportée, et notamment acheminée jusqu'au système SYS pour la recharge des véhicules VE.

Le réseau R est raccordé à au moins une installation P de production d'électricité configurée pour générer de l'énergie électrique et injecter cette énergie électrique sur le réseau R en vue de son utilisation par des usagers raccordés au réseau.

Le réseau R considéré dans le cadre de l'invention couvre une surface quelconque. Par exemple, il peut s'agir d'un réseau à l'échelle d'un quartier, d'une ville, d'une région, d'un pays ou même d'un continent.

Le réseau R comprend une portion de transport T, une portion moyenne-tension HT et une portion basse-tension BT. De manière connue, les portions moyenne-tension HT et basse-tension BT forment conjointement une portion de distribution du réseau.

La portion de transport T forme une composante globale du réseau R qui permet le transport d'électricité sur de grandes distances. La portion basse-tension BT forme une composante locale du réseau via laquelle les usagers sont raccordés au reste du réseau R. La portion moyenne-tension HT forme typiquement une composante de jonction entre la portion BT et la portion de transport T.

Ces portions (le réseau R de manière générale) définissent des nœuds du réseau raccordés entre eux par des segments de réseau. Les nœuds incluent par exemple un ou plusieurs équipements adaptés pour convertir l'énergie électrique pour la faire passer d'un format donné à un autre (par exemple différant l'un de l'autre au moins par des valeurs de tension différentes). Les segments incluent par exemple des câblages.

Le réseau, ses portions, ses nœuds et les segments entre les nœuds présentent un dimensionnement donné, qui se traduit par exemple par l'existence de capacités de ces différents éléments, notamment en termes de puissance électrique admissible, d'intensité admissible et de tension admissible.

On remarque que dans la Figure 1, les portions moyenne-tension HT sont illustrées comme étant toutes raccordées à la portion de transport par un même noeud. Toutefois, dans le cadre de l'invention, ceci peut ne pas être le cas. Notamment, les portions basse-tension et moyenne-tension impliquées peuvent être éloignées géographiquement, et correspondre à des régions différentes d'un même pays.

En référence à la Figure 1, le système SYS selon l'invention comprend une pluralité de dispositifs de recharge RECH et un dispositif de coordination COOR.

Chaque dispositif de recharge RECH est adapté pour réaliser la recharge d'au moins un véhicule VE en énergie électrique. À cet effet, il est configuré pour prélever de l'énergie électrique au réseau R et fournir une puissance électrique régulée pour la recharge de ce véhicule VE.

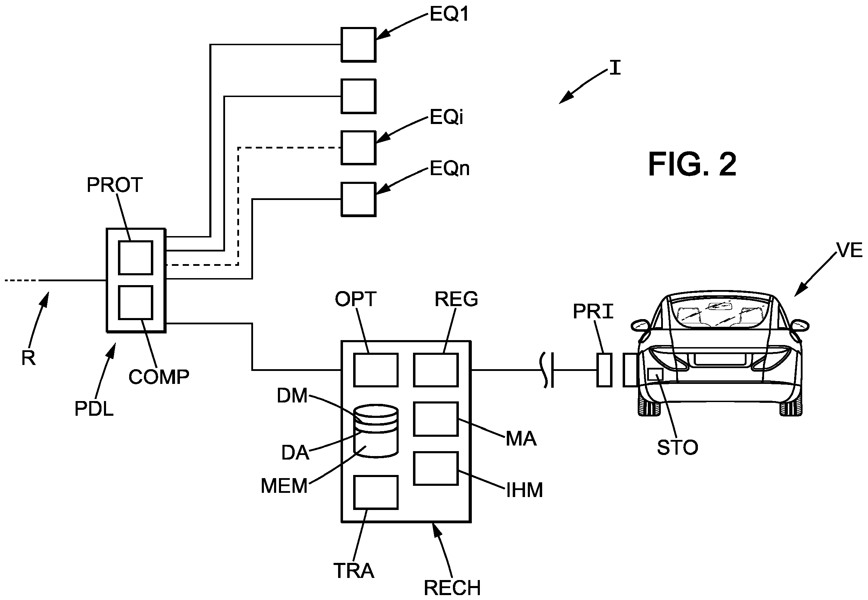

En référence à la Figure 2, chaque dispositif de recharge RECH est raccordé au réseau R par un point de livraison PDL auquel sont également raccordés des équipements électriques EQi configurés pour soutirer de l'énergie électrique au réseau R.

Les équipements EQi et le dispositif de recharge RECH font partie d'une installation I. Cette installation correspond par exemple à un lieu de résidence. Par exemple, les équipements EQi sont au moins en partie installés à l'intérieur d'une habitation. Le dispositif de recharge est par exemple agencé à l'extérieur.

Alternativement, cette installation est un lieu tertiaire tel qu'un lieu de commerce ou encore une entreprise. L'installation comprend par exemple un parking aux abords duquel ou au niveau duquel le dispositif de recharge est agencé.

De façon générale, l'invention trouve son application quelle que soit l'installation I.

Préférentiellement, les équipements EQi et le dispositif de recharge constituent l'ensemble des éléments susceptibles de soutirer de l'énergie électrique au point de livraison. Autrement dit, seuls les équipements EQi et le dispositif de recharge RECH sont adaptés pour soutirer de l'énergie électrique au point de livraison PDL.

Le point de livraison PDL est prévu pour l'approvisionnement en énergie électrique des équipements EQi et du dispositif RECH.

En pratique, le point de livraison PDL correspond à l'interface de raccord entre le réseau R et la composante électrique de l'installation I à laquelle les équipements EQi et le dispositif RECH appartiennent. Il comprend par exemple un ou plusieurs équipements électriques configurés pour opérer ce raccord.

Par exemple, le point de livraison PDL comprend un dispositif de comptage COMP pour le décompte de l'énergie électrique et/ou de la puissance électrique soutirée au point de livraison par les équipements EQi et le dispositif RECH.

Avantageusement, le dispositif de comptage COMP est configuré pour décompter au moins la puissance électrique et l'énergie électrique soutirées par ces éléments au cours du temps. On remarque que le décompte de la puissance électrique peut être opéré sur la base du décompte de l'énergie électrique rapporté à des unités de temps.

Avantageusement, le dispositif de comptage COMP est adapté pour catégoriser l'énergie électrique soutirée au point de livraison PDL en usages et mesurer la consommation pour chacun de ces usages. Ces usages correspondent chacun à un type d'activités parmi un ensemble prédéterminé.

Par exemple, pour une installation I de type résidentiel, ces usages comprennent le chauffage de l'installation I, la réfrigération de l'installation I, la production d'eau chaude sanitaire, l'éclairage de l'installation I, un usage cuisson, correspondant à l'emploi d'énergie électrique pour cuire, un usage lavage correspondant à l'emploi d'énergie électrique pour laver, un usage dit produits bruns, correspondant à un emploi d'énergie électrique pour le fonctionnement d'appareils électroménagers tels que des téléviseurs, etc.

On remarque que cette catégorisation en usages est optionnelle.

En outre, le dispositif de comptage COMP est configuré pour communiquer avec le dispositif de recharge RECH associé, en particulier pour la fourniture des données représentatives de la consommation, par exemple de la puissance, des équipements EQi et collectées par lui au cours du temps. On remarque que les données communiquées à un instant donné sont relatives à un instant précédant immédiatement cet instant, ou/et relatives à des instants plus éloignés.

En outre, le dispositif de comptage COMP est configuré pour communiquer avec le dispositif de coordination COOR, notamment pour lui fournir les mesures relevées. Toute technologie adaptée pour ce faire, tel qu'une technologie par courant porteur en ligne (CPL), peut être employée.

Le point de livraison PDL comprend avantageusement en outre un dispositif de protection PROT configuré pour protéger l'installation électrique définie par les équipements EQi et le dispositif RECH et les éléments les raccordant au point de livraison. Ce dispositif de protection PROT comprend avantageusement un organe de coupure. On remarque que cet organe de coupure peut être matériel, et comprend par exemple un disjoncteur, et/ou logiciel.

On remarque que ce dispositif de protection PROT est optionnellement intégré au dispositif de comptage, et ce au moins en partie.

Dans le contexte de l'invention, le point de livraison PDL est configuré pour délivrer une puissance électrique maximale, notée Pmax. Cette puissance maximale est par exemple déterminée en fonction de l'abonnement de soutirage souscrit auprès d'un fournisseur pour le point de livraison. Cette puissance Pmax est par exemple inférieure ou égale à 36 kVA.

Comme indiqué précédemment, les équipements EQi sont configurés pour fonctionner au moins en partie à partir d'énergie électrique.

Ces équipements EQi correspondent par exemple à des équipements classiques équipant un lieu de résidence, tels que des radiateurs, des luminaires, des appareils électroménagers, un four, des plaques de cuisson, un chauffe-eau, etc. Un autre type d'équipements envisagé est relatif aux serveurs, par exemple des serveurs de données, qui sont par exemple réunis au sein de structures communément appelées « data centers », qui vient de l'anglais et peut être traduit par centre de données.

Comme indiqué précédemment, le dispositif de recharge RECH est spécifiquement prévu pour assurer la recharge du véhicule électrique VE en énergie électrique à partir de l'énergie électrique qu'il soutire au point de livraison PDL. En particulier, il est prévu pour fournir en sortie au véhicule VE une puissance électrique régulée Pout.

En outre, il est configuré pour communiquer avec le point de livraison PDL, notamment le dispositif de comptage COMP, avec le véhicule électrique VE et avec le dispositif de coordination COOR. Ces communications sont par exemple mises en œuvre par tout moyen connu, tel qu'Internet, ZigBee, WiFi, un moyen filaire, notamment un fil pilote pour les communications avec le véhicule.

Le dispositif RECH comprend une prise PRI, une mémoire MEM et un module de traitement TRA. En outre, il comprend un module d'optimisation OPT, un module de régulation REG et un module d'apprentissage MA. Avantageusement, il comprend en outre une interface homme-machine, ci-après interface IHM.

La prise PRI est destinée à être branchée au véhicule électrique VE pour raccorder électriquement celui-ci au dispositif de recharge notamment pour la recharge du véhicule électrique. À cet effet, le véhicule comprend lui-même une prise de forme complémentaire destinée à coopérer avec la prise PRI, comme indiqué précédemment.

La prise PRI est par exemple de facture connue. Elle se présente par exemple sous la forme d'une prise femelle, la prise portée par le véhicule étant de type mâle.

La mémoire MEM comprend des programmes dont l'exécution par le module de traitement TRA permet le fonctionnement du dispositif de recharge.

Avantageusement, elle comprend en outre des données d'apprentissage DA décrites ci-après.

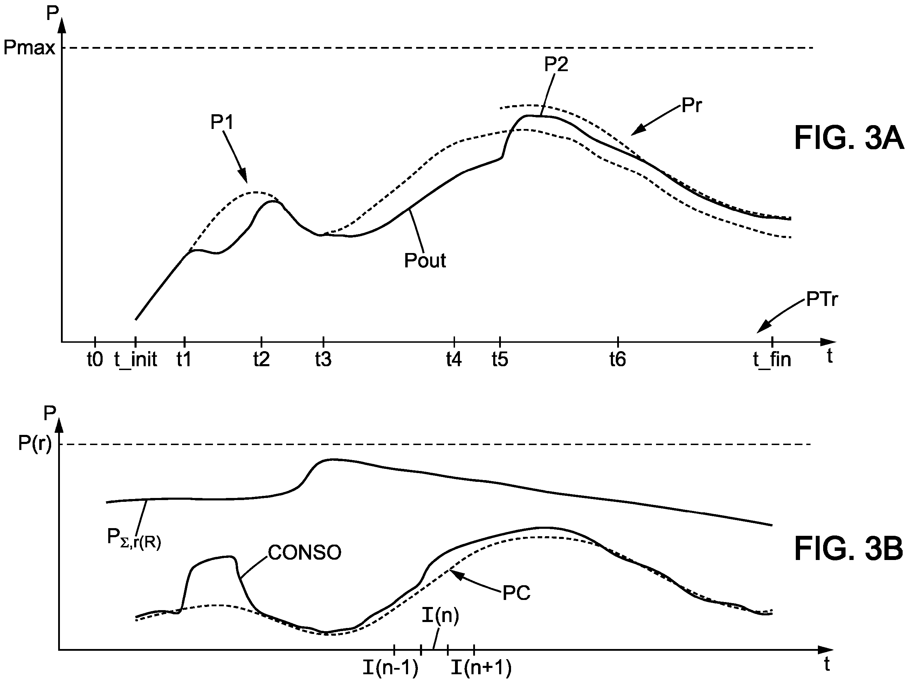

En outre, elle comprend avantageusement des données de mesure DM. Ces données de mesure sont représentatives de mesures, notamment de puissance électrique, soutirée par les équipements EQi au cours du temps. Ces données définissent notamment une courbe de puissance CONSO (Figure 3B) représentative de la puissance électrique soutirée par les équipements EQi au point de livraison en fonction du temps.

Ces données sont construites à partir des données de consommation générées par le dispositif de comptage et envoyées au dispositif RECH, par exemple à fréquence régulière. Ces données incluent par exemple la courbe de consommation du point de livraison n'incluant pas la consommation relative à la recharge du véhicule électrique.

On remarque que la mémoire MEM peut correspondre à une pluralité de mémoires de stockage distinctes, telles que par exemple une ou plusieurs mémoires volatiles et/ou une ou plusieurs mémoires non volatiles. Les différentes données sont par exemple distribuées entre ces mémoires distinctes.

Le module de traitement TRA est configuré pour le pilotage des différents éléments du dispositif de recharge RECH pour leur bon fonctionnement.

Le module de traitement TRA comprend par exemple un ou plusieurs processeurs.

Dans l'exemple de la Figure 1, le module d'optimisation OPT, le module de régulation REG et le module d'apprentissage MA ont été représentés comme des modules dédiés. En pratique, ils peuvent prendre une forme quelconque. En particulier, ils peuvent être logiciels, matériels ou comprendre une composante logicielle et une composante matérielle.

Par exemple, le module d'optimisation OPT comprend une composante logicielle stockée dans la mémoire MEM et dont l'exécution par le module de traitement TRA se traduit par la mise en œuvre des fonctionnalités décrites ci-après.

Il en va de même des modules de régulation et d'apprentissage. Concernant le module de régulation, celui-ci comprend avantageusement un dispositif matériel de régulation, comprenant par exemple un ou plusieurs convertisseurs configurés pour délivrer en sortie la puissance électrique régulée délivrée par le dispositif de recharge RECH.

En référence aux Figures 2, 3A et 3B, le module d'optimisation OPT est configuré pour construire un profil de recharge Pr associé à une plage temporelle de recharge PTr. Le profil de recharge Pr est représentatif d'une première puissance électrique de recharge P1, ou première puissance P1, adaptée pour être délivrée en sortie du dispositif RECH au véhicule VE au cours de la plage PTr pour sa recharge. Autrement dit, pour chaque instant donné de la plage temporelle de recharge PTr, le profil de recharge est défini par la puissance P1 à cet instant, cette puissance P1 variant *a priori* au cours du temps.

La plage PTr correspond à la plage temporelle au cours de laquelle le véhicule électrique est rechargé. Cette plage débute à un instant t_init et finit à un instant t_fin.

L'instant t_init est par exemple défini en fonction de l'instant du branchement du véhicule VE au dispositif de recharge. Par exemple, il correspond à cet instant.

Avantageusement, il lui est postérieur. Plus spécifiquement, il correspond avantageusement à l'instant où le dispositif de recharge commence à envoyer de l'énergie électrique au véhicule pour sa recharge. L'intervalle de temps entre le branchement du véhicule et cet instant est par exemple employé pour la mise en œuvre d'une étape initiale de préparation du dispositif de recharge décrite ci-après et au cours de laquelle un profil de recharge Pr est construit. On remarque que cette préparation peut également être mise en œuvre, ou du moins débuter, avant l'instant du branchement du véhicule, par exemple lorsque le véhicule est prévu pour fournir à distance au dispositif de recharge des informations relatives à ses besoins en énergie électrique.

L'instant t_fin correspond à l'instant auquel la recharge du véhicule VE est considérée comme achevée. En pratique, à partir de cet instant, aucune énergie électrique n'est plus alors fournie au véhicule pour sa recharge jusqu'à ce que celui-ci soit débranché de la prise PRI.

L'instant t_fin est par exemple connu préalablement à l'instant t_init. Dans ce cas, l'instant t_fin est par exemple prédéterminé en fonction d'une information reçue par le dispositif de recharge RECH. Cette information est par exemple issue du véhicule VE lui-même, ou bien est saisie par un utilisateur, par exemple via l'interface IHM.

Alternativement, cet instant est déterminé, par exemple par le module d'optimisation OPT. En effet, cet instant est par exemple un élément du résultat du processus de construction du profil de recharge. La plage de recharge PTr est par exemple subdivisée en intervalles consécutifs I(n-1), I(n), I(n+1) pris en compte dans le cadre du fonctionnement du dispositif de recharge RECH.

Ces intervalles sont par exemple réguliers (c'est-à-dire ayant tous une même durée), leur durée étant par exemple de l'ordre de la seconde. Alternativement, ces intervalles ne sont pas tous de même durée. Par exemple, dans un premier mode de fonctionnement du dispositif décrit ci-après, ils présentent une durée régulière, par exemple d'un ordre de grandeur de l'ordre de la minute. Dans un deuxième mode de fonctionnement, ils sont par exemple également réguliers, avec une durée par exemple de l'ordre de la seconde.

Le profil de recharge PTr présente par exemple une configuration continue par morceaux. Par exemple, le profil définit pour chaque intervalle considéré une unique valeur de la puissance P1 constante sur tout cet intervalle.

Plusieurs modalités sont possibles pour la construction du profil. Dans un premier cas dans le cadre duquel le dispositif de recharge RECH procède de manière découplée des autres dispositifs de recharge RECH du système, le profil de recharge est construit indépendamment du dispositif de coordination et des informations afférentes au réseau R et aux autres dispositifs de recharge (ces informations sont détaillées ci-après).

Dans un deuxième cas, cette construction tient compte d'informations émises par le dispositif de coordination et renvoyant à d'autres dispositifs de recharge et/ou à l'état du réseau R.

Comme décrit plus en détail ci-après, la détermination du profil de recharge selon les modalités du premier cas est avantageusement utilisée dans le cadre de la construction du profil de recharge selon le deuxième cas. Plus spécifiquement, le profil de recharge du premier cas est utilisé comme élément de départ de la construction selon le deuxième cas.

De manière générale, le profil de recharge Pr est construit au moins en fonction de prévisions de consommation électrique PC (Figure 3B) des équipements EQi qui sont adaptés pour soutirer de l'électricité au point de livraison PDL auquel le dispositif de recharge RECH est associé. Ces prévisions couvrent au moins une partie de la plage PTr, et avantageusement toute la plage PTr.

Les prévisions de consommation sont établies préalablement au début de la plage de recharge PTr.

Ces prévisions correspondent avantageusement à la consommation prévisionnelle cumulée sur les différents équipements EQi, et définissent ainsi le comportement attendu des seuls éléments susceptibles de prélever de l'énergie électrique au point de livraison en dehors du dispositif RECH.

Par exemple, ces prévisions se présentent sous la forme d'une puissance électrique variable en fonction du temps.

Ces prévisions sont par exemple déterminées de manière connue, par exemple à partir d'un modèle GAM, qui est l'acronyme anglophone de « Generalized Additive Model », qui peut être traduit par « modèle additif généralisé ».

Par exemple, elles sont établies à partir des données de mesure DM, qui définissent un historique de consommation des équipements EQi. Avantageusement, elles sont plus spécifiquement établies à partir de données de mesure correspondant à des tranches horaires couvrant celles de la plage temporelle de recharge PTr. Ces prévisions sont par exemple établies à partir de prévisions pour chaque usage associé au point de livraison PDL. Ces prévisions par usage sont par exemple elles-mêmes déterminées à partir des données de mesure DM, qui peuvent représenter la consommation des différents usages des équipements EQi au cours du temps.

Avantageusement, les prévisions faites à un instant donné sont déterminées au moins en fonction des données de mesure DM de la consommation des équipements EQi portant sur un laps de temps précédant immédiatement cet instant. Autrement dit, les données de consommation les plus récentes sont prises en compte pour la construction des prévisions.

Le profil de recharge Pr est également déterminé en fonction de la puissance maximale Pmax que le point de livraison peut délivrer.

Avantageusement, c'est-à-dire optionnellement mais de manière avantageuse, le profil de recharge Pr est en outre déterminé en fonction d'au moins un élément parmi :
- un comportement en recharge du dispositif de stockage STO du véhicule électrique,
- le besoin en énergie électrique du dispositif de stockage STO du véhicule électrique pour la recharge de celui-ci,
- un tarif de l'énergie électrique fournie par le point de livraison PDL pour la recharge du véhicule,
- le comportement électrotechnique du dispositif de PROT du point de livraison PDL,
- une capacité de puissance électrique du dispositif de recharge RECH, c'est-à-dire une puissance électrique maximale que le dispositif de recharge RECH est lui-même dimensionné pour délivrer.

Le comportement en recharge du dispositif STO est représentatif du fonctionnement en charge du dispositif de stockage. Ce comportement inclut par exemple des considérations relatives à une ou plusieurs contraintes concernant la puissance électrique reçue, telle que sa valeur relativement à une borne inférieure à dépasser et/ou une borne supérieure à ne pas dépasser, ou bien à des variations de puissance au cours du temps à ne pas dépasser. Ce comportement peut alternativement ou parallèlement inclure une considération relative au nombre d'interruptions de charge observées pendant la période PTr, qui est par exemple à maintenir inférieur à une valeur prédéterminée.

En pratique, ce comportement en recharge du dispositif STO est représentatif de caractéristiques de la recharge du dispositif de stockage STO qu'il est préférable d'observer pour ne pas endommager celui-ci.

Le besoin en énergie du dispositif de stockage STO correspond à un état de charge du dispositif de stockage prescrit pour le besoin en mobilité du véhicule. Ce besoin est par exemple fonction de la quantité d'énergie électrique stockée dans le dispositif STO lors de son branchement au dispositif RECH, ainsi que d'une quantité d'énergie électrique souhaitée en fin de charge. On remarque que l'état de charge final ne correspond pas nécessairement à une recharge complète du dispositif de stockage STO.

Cette quantité d'énergie électrique souhaitée en fin de charge est par exemple fournie au dispositif RECH, par exemple par l'utilisateur via l'interface IHM ou le véhicule VE. Alternativement, elle est estimée, par exemple par le module d'optimisation ou par un autre équipement quelconque du dispositif de recharge RECH, tel qu'un module dédié. Cette estimation est par exemple construite à partir de données d'utilisation du véhicule. Ces données d'utilisation sont par exemple fournies par le véhicule au dispositif RECH, qui les stocke dans la mémoire MEM. Par exemple, ces données comprennent un historique de déplacements réalisés avec le véhicule. Cet historique comprend ou est par exemple déterminé à partir de données de positionnement GNSS (pour « Global Navigation Satellite System », qui signifie système de positionnement global par satellite) représentatives de positions que le véhicule a prises au cours du temps, et que le dispositif RECH obtient du véhicule VE.

En pratique, le besoin en énergie électrique du dispositif de recharge se présente par exemple sous la forme d'un état de charge à atteindre en fin de plage PTr.

Le tarif de l'énergie électrique est représentatif du coût de l'énergie électrique soutirée ou à soutirer au point de livraison pour la recharge du véhicule électrique. Autrement dit, il s'agit du prix de la recharge du véhicule en électricité que le dispositif RECH a vocation à réaliser. De manière connue, ce prix (i.e. le tarif) est déterminé à partir du coût unitaire associé à une unité de mesure d'électricité, typiquement un kilowattheure (kWh). Or, de manière connue, cette unité de mesure d'électricité est associée à un prix, par exemple en euros par kilowattheure, qui peut différer d'une plage horaire à une autre.

Par exemple, le tarif est déterminé à partir de données stockées dans la mémoire qui incluent des index tarifaires en fonction du temps adaptés pour être mis en correspondance avec une donnée de prix par exemple fournie par un équipement distant. On remarque que ces index tarifaires peuvent faire l'objet d'une mise à jour, par exemple déclenchée par un équipement extérieur, ou bien à fréquence régulière. Le comportement électrotechnique du dispositif de protection PROT est représentatif du fonctionnement de celui-ci en fonction de la puissance soutirée au point de livraison PDL, et en particulier de conditions de basculement de celui-ci entre un état où il autorise le soutirage d'énergie électrique au point de livraison par le dispositif de recharge et les équipements EQi, et un état où il prévient ce soutirage, notamment afin de protéger l'installation I.

Par exemple, le dispositif de protection PROT peut être configuré pour autoriser le dépassement de la puissance maximale Pmax pendant un court laps de temps (correspondant à un nombre prédéterminé d'intervalles I(n)), mais bascule dans un état n'autorisant plus le soutirage au-delà de ce laps de temps. On remarque que le laps de temps en question est par exemple prédéterminé en fonction de l'amplitude du dépassement.

En pratique, ce comportement modélise la réaction du dispositif de protection aux évènements intéressant la sécurité de la composante électrique de l'installation I.

Avantageusement, le module d'optimisation OPT est configuré pour déterminer le profil de recharge Pr en tant que solution optimale d'un problème d'optimisation à au moins un objectif et à au moins une contrainte. Comme décrit plus en détails ci-après, avantageusement, on considère ce problème au sens d'une approche multicritères dont les modalités sont décrites ci-après.

On entend par « objectif » la quantité à minimiser dans le problème d'optimisation. On entend par « contrainte » une condition à vérifier par la solution du problème.

Les objectifs et les contraintes retenus diffèrent en fonction du fait que l'on se place dans le premier cas ou dans le deuxième cas.

Dans le cadre du premier cas, par exemple, le ou les objectifs sont choisis parmi le coût (prix) associé à la recharge du véhicule électrique, la valeur maximale de la puissance électrique soutirée au point de livraison pendant la recharge du véhicule (c'est-à-dire la plus haute des valeurs prises par la puissance cumulée pour l'alimentation des équipements et la recharge du véhicule par le dispositif RECH lors de la période PTr) et l'achèvement de la recharge du véhicule VE le plus tôt possible.

Avantageusement ces trois objectifs sont pris en compte, le profil de recharge selon le premier cas étant alors construit comme solution optimale d'un problème de minimisation de la valeur maximale de la puissance électrique soutirée au point de livraison par le dispositif de recharge et les autres équipements pour la plage temporelle de recharge, d'un coût total de l'énergie électrique à fournir par le point de livraison pour la plage temporelle de recharge et de l'instant de fin de charge.

De façon générale, la ou les contraintes selon le premier cas sont avantageusement choisies parmi : la puissance maximale Pmax, dont le dépassement est à prévenir (ou du moins limiter), le besoin en énergie électrique du véhicule, qui conditionne la quantité d'énergie totale fournie au véhicule pendant la plage PTr, et le comportement en recharge du dispositif de stockage STO, qui vise à prévenir une recharge du dispositif STO de nature à l'endommager. N'importe quelle combinaison de ces contraintes peut être retenue.

On remarque que le dépassement de la puissance Pmax peut être autorisé dès lors que ce dépassement est opéré dans des conditions n'induisant pas un basculement du dispositif de protection dans sa configuration coupée n'autorisant pas le soutirage au point de livraison.

Dans le cadre de la construction du profil de recharge selon le deuxième cas, avantageusement on retient au moins un objectif supplémentaire et/ou au moins une contrainte supplémentaire.

Le ou les objectifs supplémentaires sont avantageusement choisis parmi :
- la puissance électrique maximale cumulée sur l'ensemble des véhicules électriques rechargés ou à recharger par tout ou partie des dispositifs de recharge RECH du système SYS. ;
- un impact sur l'état du réseau des recharges menées ou à mener par tout ou partie des dispositifs de recharge RECH.

Comme décrit plus en détail ci-après, les dispositifs de recharge considérés pour l'un et l'autre de ces objectifs sont ceux impliqués dans la phase dite d'optimisation coordonnée (décrite ci-après) aboutissant à la construction d'un profil de recharge selon le deuxième cas pour tous ces dispositifs de recharge.

Avantageusement, la contrainte supplémentaire correspond à une contrainte relative au réseau R, par exemple à la portion basse-tension BT raccordant le point de livraison PDL associé au reste du réseau R (mais pas nécessairement du réseau BT). Cette contrainte relève par exemple d'une (ou plusieurs) tension électrique, intensité électrique ou puissance électrique définissant une ou plusieurs bornes supérieures et/inférieures à ne pas franchir, ou encore d'une fréquence. Ces éléments peuvent être vus comme des capacités du réseau d'alimentation.

Par exemple, une contrainte donnée porte sur la valeur d'une telle capacité pour un élément du réseau, ou bien sur la valeur associée à un ensemble d'équipements du réseau en formant une région. Cette région coïncide ou non avec une portion donnée.

Par exemple, une contrainte de puissance peut porter sur un nœud donné.

On remarque qu'avantageusement, une ou plusieurs contraintes portent sur un ensemble de nœuds dit pilotes. Ces nœuds sont choisis au sein du réseau et définissent des points de référence du réseau. Par exemple, le choix de ces nœuds est fait de sorte qu'une satisfaction d'une contrainte associée à ces nœuds est considérée comme représentative d'une satisfaction de cette contrainte par l'ensemble du réseau.

Les contraintes parmi lesquelles on choisit incluent par exemple une fréquence associée au réseau dans son intégralité, une ou plusieurs tensions associée(s) à un équipement ou ensemble d'équipements donné, une intensité associée à la portion basse-tension BT du réseau, une puissance électrique associée à un ou plusieurs nœuds (par exemple aux nœuds pilotes), etc.

En ce qui concerne le détail de la construction du profil de recharge, en particulier selon le premier cas, cette construction repose avantageusement sur une approche multicritère.

Par exemple, au problème on associe une métrique définie à partir de plusieurs sous-métriques respectivement associées à l'un des objectifs. Chaque sous-métrique est pondérée par un facteur de forme choisie. La métrique est par exemple définie en tant que combinaison, par exemple linéaire, des différentes sous-métriques.

Chaque sous-métrique a par exemple une valeur correspondant à l'objectif associé, par exemple le tarif, l'instant de fin charge, la valeur de la puissance maximale atteinte au cours de la plage.

À partir des données du problème ainsi modélisé, on détermine le profil de recharge, par exemple par technique de résolution par programmation linéaire en nombres entiers (d'acronyme PLNE)

Alternativement, on peut employer une méthode dite hiérarchique (méthode parfois connue sous le nom de méthode epsilon contrainte), dans le cadre de laquelle on procède sur chaque sous-métrique de manière séquentielle. Dans ce cadre, on ajoute par exemple une ou des contraintes sur les sous-métriques autres que celle couramment considérée pour prévenir la détérioration de leurs performances.

Le détail de la détermination d'un profil de recharge selon le deuxième cas est donné ci-après en référence au dispositif de coordination COOR.

Avantageusement, le module d'optimisation OPT est en outre adapté pour mettre à jour le profil de recharge Pr. Il est par exemple adapté pour ce faire au cours de la plage PTr, la mise à jour portant sur au moins une partie de la portion restante de la plage temporelle, et avantageusement au moins toute cette portion restante. En pratique, cette mise à jour peut être vue comme le remplacement du profil de recharge couramment employé par un nouveau profil de recharge dont la plage de recharge PTr couvre tout ou partie du reliquat de la plage temporelle de recharge PTr du profil de recharge précédemment employé, et optionnellement s'étend au-delà.

Cette mise à jour est par exemple mise en œuvre sur commande, par exemple reçue du module de régulation ou encore du dispositif de coordination.

Alternativement, le module d'optimisation OPT déclenche lui-même cette mise à jour.

Avantageusement, cette mise à jour est mise en œuvre en réponse à la détection de la vérification d'une ou plusieurs conditions décrites ci-après.

Pour la mise en jour en tant que telle, le module d'optimisation OPT est configuré pour mettre à jour les données utilisées pour la construction du profil de recharge initial, et pour déterminer le profil mis à jour à partir de ces données mises à jour.

Par exemple, le module d'optimisation OPT est configuré pour mettre à jour les prévisions de consommation utilisées pour la construction du profil de recharge précédemment employé, par exemple à partir des données de mesure DM reçues depuis le début de la plage PTr. Avantageusement, quand le besoin en énergie électrique du véhicule est employé, il est configuré pour mettre à jour celui-ci, par exemple en tenant compte de la satisfaction partielle de ce besoin via l'énergie électrique déjà fournie au véhicule VE lors de la plage PTr.

On remarque que cette mise à jour peut résulter du déclenchement par le dispositif de coordination d'une étape d'optimisation coordonnée décrite ci-après et impliquant le dispositif de recharge, ce déclenchement formant par exemple la condition employée ci-dessus. Le profil mis à jour correspond alors à un profil construit selon le deuxième cas.

Lorsque la mise à jour du profil est déclenchée à l'initiative du dispositif de recharge, elle est avantageusement mise en œuvre sur la seule base d'informations locales, c'est-à-dire d'informations indépendantes des autres dispositifs de recharge et du dispositif de coordination ainsi que du réseau R, et ce quel que soit le cas selon lequel le profil de recharge couramment employé a été déterminé (premier cas ou deuxième cas). Autrement dit, elle correspond alors à une construction de profil de recharge selon le premier cas. Cette construction tient toutefois avantageusement au moins compte de la satisfaction partielle du besoin en énergie électrique du véhicule VE lorsque cet élément est utilisé pour la construction du profil de recharge.

Toujours en référence à la Figure 2, le module de régulation REG est configuré pour réguler la puissance électrique Pout effectivement fournie par le dispositif RECH au véhicule VE pendant la période PTr. Cette puissance Pout est variable au cours du temps.

Le module de régulation REG comprend un premier mode de fonctionnement dans lequel il est configuré pour réguler la puissance Pout pour la faire correspondre à la puissance P1 du profil de recharge Pr.

Autrement dit, dans ce premier mode de fonctionnement, le module de régulation fournit une puissance électrique régulée adossée à la puissance P1 déterminée par le module d'optimisation, qui est alors la puissance prescrite pour la sortie du dispositif de recharge RECH.

En pratique, dans le cadre de ce mode de fonctionnement, le profil de recharge Pr couramment considéré (et susceptible d'être remplacé par un autre nouvellement construit formant un profil mis à jour) est appliqué.

On remarque que pour des raisons de fonctionnement réel du dispositif de recharge ne correspondant pas à un cas idéal, la puissance Pout peut être légèrement différente de la puissance P1 alors prescrite, notamment au moins temporairement lors d'un changement de valeur de la puissance P1, par exemple au passage d'un intervalle à l'autre.

En outre, le module de régulation REG comprend un deuxième mode de fonctionnement dans lequel il est configuré pour réguler la puissance Pout pour la faire correspondre à une deuxième puissance P2 prescrite. Cette puissance P2 est *a priori* variable au cours du temps.

Comme précédemment, la puissance Pout peut être légèrement différente de la puissance P2 pour des raisons de fonctionnement non idéal du dispositif de recharge.

La puissance P2 est avantageusement déterminée par le module de régulation REG lui-même, ou bien par un autre module qui lui communique alors la valeur de cette puissance au cours du temps (qui peut alors être vu comme faisant partie du module de régulation.

Avantageusement, la puissance P2 est construite en tant que somme entre d'une part la puissance P1 (à l'instant correspondant) et, d'autre part une grandeur de régulation (pouvant prendre des valeurs négatives) représentative d'un ajustement de la puissance Pl.

Cette grandeur de régulation peut notamment être représentative d'une divergence entre l'état réel de l'installation I et son état tel que prévu lors de la construction du profil de recharge Pr déterminé par le module d'optimisation OPT.

En pratique, la valeur de P1 étant connue, le traitement effectué pour déterminer P2 porte essentiellement sur cette grandeur de régulation.

Le deuxième mode de fonctionnement comprend :
- un sous-mode de fonctionnement individuel ; et ;
- un sous-mode de fonctionnement collectif.

Dans le cadre du sous-mode individuel, la grandeur de régulation est avantageusement déterminée sur la base de seules informations locales, autrement dit d'informations relevant de la seule installation I considérée. Notamment, la grandeur de régulation est indépendante des données envoyées par le dispositif de coordination COOR et les autres dispositifs de recharge ainsi que de l'état du réseau aux instants considérés. On remarque que ceci est en particulier vrai pour les données considérées à part la valeur de P1 aux instants correspondants, qui elle peut avoir été déterminée sur la base des informations fournies par le dispositif de coordination.

Dans le cadre du sous-mode collectif, la grandeur de régulation est avantageusement déterminée au moins sur la base d'informations issues du dispositif de coordination COOR, et avantageusement sur la base d'informations locales également, par exemple de même nature que celles employées dans le cadre du sous-mode de fonctionnement individuel.

Dans le cadre du sous-mode de fonctionnement individuel, la puissance P2 est avantageusement déterminée en fonction de la puissance électrique maximale Pmax. En outre, elle est déterminée en fonction des données de mesure DM fournies par le dispositif de comptage COMP au dispositif RECH concernant la puissance électrique soutirée par les équipements EQi, et plus spécifiquement à partir des données définissant la courbe de puissance CONSO soutirée par les équipements EQi raccordés au point de livraison PDL considéré.

Avantageusement, ces données de mesure sont traitées par le module de régulation REG pour constituer une prévision à court terme de la puissance que les équipements EQi sont destinés à soutirer au point de livraison PDL. Par exemple, par « à court terme » on entend que cette prévision porte sur la consommation prévue pour tout ou partie de l'ensemble des intervalles futurs situés à moins d'un nombre prédéterminé s d'intervalles de l'intervalle courant, par exemple de l'ordre de 10 intervalles. Cet horizon est par exemple de 10, 20 ou encore 30 intervalles. Autrement dit, cette prévision porte sur un ou plusieurs intervalles futurs distants de moins de s intervalles de l'intervalle courant. Les prévisions portent avantageusement sur un ensemble d'intervalles consécutifs, tel que par exemple un nombre quelconque compris entre 1 et 15 d'intervalles suivant l'intervalle courant, ou bien suivant un intervalle lui-même futur appartenant à l'horizon considéré.

Le détail de la détermination de ces prévisions est par exemple connu.

La deuxième puissance P2 (au moins en sous-mode individuel) est en outre déterminée en fonction de la puissance P1, c'est-à-dire du profil de recharge déterminé par le module d'optimisation.

Avantageusement, la deuxième puissance P2 (au moins en sous-mode individuel) est en outre déterminée à partir d'au moins un élément parmi :
- le comportement électrotechnique du dispositif de protection PROT du point de livraison PDL,
- une contrainte de recharge du véhicule électrique représentative d'au moins une plage de valeurs de puissance électrique Pout qui est exclue,
- d'un nombre maximal d'arrêts de la charge du véhicule électrique par le dispositif de recharge RECH au cours de la plage temporelle de recharge, c'est-à-dire d'occurrences de situations dans lesquelles P2 est nulle.

Un élément pouvant également être pris en compte est la capacité de puissance du dispositif de recharge RECH, c'est-à-dire une puissance maximale que le dispositif de recharge RECH est lui-même dimensionné pour délivrer.

Comme précédemment, le comportement électrotechnique du dispositif PROT est représentatif de sa réponse à des évènements survenant sur la composante électrique de l'installation et sur le point de livraison, notamment aux dépassements de la puissance Pmax par la puissance totale soutirée au point de livraison PDL.

En pratique, ce comportement est pris en compte sous la forme d'un modèle, par exemple défini par une ou plusieurs règles. L'une de ces règles porte par exemple sur le fait que le dépassement de la puissance Pmax peut être opéré mais ne peut alors pas excéder une certaine valeur et ne doit pas rester vérifié sur une période d'une durée supérieure à une durée prédéterminée. Par exemple, ces règles se présentent sous la forme d'une ou plusieurs abaques.

Ainsi, par exemple, la puissance P2 est construite en fonction de cette ou ces règles, dont au moins une incorpore une ou des conditions relatives au dépassement de Pmax.

On remarque qu' alternativement, la prise en compte de Pmax peut être mise en œuvre sous la forme d'une borne supérieure de la puissance P2 qui ne doit pas être dépassée, même sur une durée très courte.

Comme indiqué précédemment, l'exclusion de plages de valeurs de Pout et le nombre maximal d'arrêt(s) de la charge constituent des conditions relatives à la recharge du véhicule dans des conditions n'induisant pas sa détérioration.

Par exemple, pour le sous-mode individuel, l'approche retenue pour déterminer la grandeur de régulation pour la détermination de P2 pour les différents intervalles repose sur une approche heuristique.

Par exemple, dans le cadre de cette approche, pour un intervalle de temps donné, la valeur de la grandeur de régulation est choisie parmi une pluralité de valeurs discrètes respectivement associées à un état des composants locaux du système parmi plusieurs états possibles. Ces composants incluent le point de livraison PDL, le dispositif de recharge RECH, le véhicule électrique VE et les équipements électriques EQi associés au point de livraison PDL raccordant le dispositif de recharge RECH considéré.

Les valeurs en question peuvent par exemple être déterminées au moins à partir de P1.

Cet état du système (i.e. de ses composants locaux) est déterminé à partir des éléments considérés pour la détermination de P2. Les éléments retenus sont par exemple successivement analysés, chaque élément donnant lieu à la retenue d'une ou plusieurs valeurs parmi une pluralité de valeurs possibles, et ce de façon à ne retenir qu'une seule valeur. Par exemple, l'analyse d'au moins un élément est adaptée pour donner lieu à la retenue d'une unique valeur de la grandeur de régulation, et ce au moins pour le dernier élément analysé. D'autres éléments que le dernier peuvent aboutir à la retenue d'une unique valeur, interrompant par-là la séquence d'analyse des éléments.

On remarque que pour un élément donné, les valeurs possibles parmi lesquelles la ou les valeurs retenues sont choisies sont par exemple définies en fonction du résultat de l'analyse du ou des critères précédents. Autrement dit, le deuxième critère analysé peut aboutir à la retenue de valeurs possibles (parmi lesquelles la sélection est opérée par la suite) différentes en fonction du résultat de l'analyse du critère précédent, et le troisième tenant compte du premier et/ou du deuxième, et ainsi de suite pour les différents éléments analysés.

Par exemple, en ce qui concerne les prévisions à court terme, s'il est déterminé pour un intervalle de temps (futur relativement à l'intervalle courant) que l'écart entre Pmax et les prévisions de consommation est inférieur à une valeur seuil, la valeur retenue de la grandeur de régulation est choisie pour que la puissance P2 soit nulle ou minimale.

On remarque que certaines valeurs peuvent être exclues au cours du temps, par exemple suite à leur sélection un nombre prédéterminé de fois au cours de tout ou partie des intervalles de temps passés.

Dans le cadre du sous-mode de fonctionnement collectif, la puissance P2 est déterminée au moins à partir d'une donnée d'état du réseau d'alimentation en énergie électrique déterminée par le dispositif de coordination à partir de mesures représentatives d'un état du réseau effectuées lors d'un intervalle de temps précédent ledit instant considéré. On remarque que la donnée d'état du réseau peut être une prévision de l'état du réseau déterminée à partir des mesures en question. L'état pris en compte correspond par exemple à une valeur d'une grandeur associée à un élément ou un ensemble d'éléments (définissant par exemple une région du réseau), comme décrit ci-dessus, relativement à la capacité correspondante.

L'approche retenue est par exemple analogue à celle mise en œuvre pour la détermination de P2 dans le sous-mode individuel, à l'exception du fait qu'elle implique le dispositif de coordination. Cette détermination est détaillée ci-après.

Le module de régulation REG est adapté pour basculer entre le premier mode de fonctionnement et le deuxième mode de fonctionnement. En outre, il est adapté pour basculer entre les deux sous-modes de fonctionnement du deuxième mode de fonctionnement.

Avantageusement, le basculement réalisé est opéré en réponse à la vérification d'au moins une condition.

La ou les conditions employées dépendent par exemple du sens dans lequel le basculement est opéré, ainsi que du sous-mode vers lequel le module REG bascule lorsqu'il bascule vers le deuxième mode de fonctionnement.

Pour le basculement vers le sous-mode collectif, une seule condition est par exemple employée. Cette condition est par exemple la réception par le dispositif de recharge RECH d'une commande de basculement émise par le dispositif de coordination COOR.

Pour le basculement vers le sous-mode individuel, au moins une condition dite première condition est employée.

Avantageusement, au moins une première condition est définie à partir de la consommation des équipements telle que prévue par le module d'optimisation pour la construction du profil de recharge Pr, et ce pour au moins un intervalle de temps, et d'une grandeur fonction de la consommation des équipements EQi telle que mesurée, avantageusement lors de la plage de recharge PTr, c'est-à-dire la puissance fournie par la courbe CONSO.

Le ou les intervalles de temps considérés sont futurs et/ou passés.

Pour chaque intervalle passé, la grandeur correspond directement à la consommation (i.e. la puissance électrique) des équipements telle que mesurée pour l'intervalle considéré. Ainsi, pour cet intervalle sont prises en compte la prévision de consommation des équipements EQi et leur consommation telle que mesurée.

Pour chaque intervalle futur, la grandeur est aussi une prévision de consommation des équipements EQi pour cet intervalle. Cette prévision est par exemple construite au moins à partir de données de mesure DM récentes, par exemple relatives à un ou plusieurs intervalles séparés de l'intervalle considéré d'une durée maximale prédéterminée (ce qui se traduit par exemple sous la forme de la prise en compte des k dernières données reçues du point de livraison PDL relatives à la consommation des équipements EQi). Les modalités de cette première prévision sont par exemple celles mises en œuvre dans le cadre du deuxième mode de fonctionnement, et correspondent à des prévisions à court terme.

Avantageusement, la condition vise l'écart entre la consommation prévue par le module d'optimisation et la consommation telle que mesurée ou prévue à partir de données de consommation plus récentes, notamment obtenues à partir de mesures réalisées lors de la période temporelle de recharge PTr.

Avantageusement, la condition est construite pour être vérifiée si une grandeur représentative de l'écart constaté est supérieure à une valeur seuil pour un nombre prédéterminé d'intervalles consécutifs (par exemple supérieur ou égal à 1) associés à cette condition.

En pratique, la grandeur analysée (qui correspond optionnellement à une valeur absolue) peut correspondre à une différence classique. Toutefois, d'autres modalités de calcul peuvent être envisagées, de sorte qu'une différence est uniquement un exemple d'opération possible.

On remarque que cette condition peut être prise comme seule condition de basculement.

Avantageusement, au moins une des premières conditions est définie en fonction de la comparaison entre la puissance électrique maximale Pmax et d'une grandeur représentative d'une puissance électrique totale à fournir par ledit point de livraison pour le dispositif de recharge et lesdits autres équipements au cours de ladite plage temporelle de recharge.

Autrement dit, cette grandeur est définie à partir de la puissance totale sollicitée ou susceptible d'être sollicitée par les équipements EQi et le dispositif de recharge lors d'un ou plusieurs intervalles de temps de la plage PTr.

La grandeur présente une valeur donnée au cours d'un intervalle donné. En d'autres termes, elle représente la puissance électrique soutirée ou prévue pour être soutirée par le dispositif RECH et les équipements pour chaque instant de cet intervalle.

La grandeur considérée est par exemple associée à un intervalle de temps passé. Dans cette configuration, la grandeur est construite à partir des données de mesure DM pour la consommation des équipements, ainsi que l'historique de la puissance Pout fournie (qui est par exemple stocké dans la mémoire lors du fonctionnement du dispositif de recharge RECH). Alternativement, la valeur (ou les valeurs) de P2 pour l'intervalle considéré est prise en compte.

Alternativement, la grandeur considérée est associée à un intervalle futur. Dans cette configuration, la grandeur est construite à partir de prévisions de consommation des équipements EQi associés au point de livraison PDL correspondant, par exemple telles celles générées par le module d'optimisation OPT ou par le module de régulation REG. En outre, la puissance électrique associée au dispositif RECH correspond à la valeur de P1 prévue par le profil de recharge pour cet instant.

En pratique, la grandeur est par exemple construite pour correspondre à la somme de la consommation des équipements EQi (prévue ou réalisée) et celle du dispositif de recharge (prévue, réalisée respectivement) pour l'intervalle associé.

La comparaison menée correspond par exemple à une différence entre Pmax et la puissance consommée cumulée sur les équipements EQi et le dispositif de recharge RECH.

Avantageusement, la condition est construite à partir de la valeur de la grandeur pour différents intervalles consécutifs. En outre, elle est construite pour être vérifiée si la valeur de cette grandeur dépasse la puissance maximale Pmax pour un nombre prédéterminé d'intervalles consécutifs. Autrement dit, la condition est détectée comme vérifiée si elle est vérifiée pour un nombre choisi d'intervalles consécutifs.

Avantageusement, les intervalles en question sont des intervalles futurs, de sorte que le dispositif RECH évalue ainsi l'état futur du point de livraison PDL et anticipe des évènements potentiellement problématiques.

Ce nombre d'intervalles est avantageusement prédéterminé en fonction du fonctionnement du dispositif de protection PROT, et correspond ou approche par exemple la durée maximale de dépassement de Pmax que celui-ci peut tolérer sans bloquer le soutirage au niveau du point de livraison.

Alternativement, ce nombre est pris égal à un (un seul intervalle étant alors considéré).

Pour déclencher le basculement du deuxième mode de fonctionnement vers le premier mode de fonctionnement du module de régulation, avantageusement, au moins une condition dite deuxième condition est employée.

Avantageusement, au moins une deuxième condition est définie en fonction de la comparaison entre la puissance électrique maximale du point de livraison et une deuxième grandeur représentative d'une puissance électrique totale à fournir par le point de livraison pour le dispositif de recharge et lesdits autres équipements.

Cette deuxième grandeur est par exemple identique à la grandeur utilisée pour le basculement du premier mode de fonctionnement vers le sous-mode individuel du deuxième mode de fonctionnement (les valeurs de cette grandeur considérées étant toutefois *a priori* associées à d'autres intervalles).

La deuxième condition est par exemple construite pour être vérifiée si la différence entre la puissance Pmax et la valeur de cette deuxième grandeur est inférieure à une valeur prédéterminée pendant un ou plusieurs intervalles. Préférentiellement, les intervalles considérés sont des intervalles futurs.

Alternativement ou parallèlement, la ou une deuxième condition prise en compte est définie en fonction de la consommation des équipements EQi telle que mesurée, c'est-à-dire la puissance fournie par la courbe CONSO, et la consommation des équipements telle que prévue par le module d'optimisation pour la construction du profil de recharge, et ce pour au moins un intervalle de temps. Par exemple, cette condition est proche de la première condition décrite ci-dessus. Par exemple, elle est identique, à l'exception du fait qu'elle est considérée comme vérifiée lorsque la grandeur représentative de l'écart entre la prévision PC et la consommation telle que mesurée (pour des intervalles passés) ou la prévision construite à partir des mesures (pour des intervalles futurs) est inférieure à une valeur seuil prédéterminée sur le ou les intervalles retenus pour cette condition. Cette valeur seuil peut être différente de celle employée en première condition. La deuxième condition peut également en différer notamment de par le nombre d'intervalles pris en compte.

Toujours en référence à la Figure 2, le module d'apprentissage MA est configuré pour générer les données d'apprentissage DA. Ces données sont avantageusement employées dans le cadre du fonctionnement du module d'optimisation OPT, et/ou du fonctionnement du module de régulation REG.

Avantageusement, les données d'apprentissage DA comprennent des données d'apprentissage de prévision.

Ces données d'apprentissage de prévision sont prévues pour permettre d'améliorer les prévisions opérées par le module d'optimisation et/ou le module de régulation sur la base du fonctionnement du dispositif de recharge RECH au cours du temps. Ces données sont par exemple générées à partir de données statistiques concernant les modes de fonctionnement du module de régulation, sur les basculements entre ces modes, sur la puissance Pout délivrée, sur les données de besoin en recharge collectées du véhicule, sur les horaires de connexion du véhicule et/ou sur les prévisions de consommation précédemment effectuées.

Avantageusement, ces données incluent des données de paramétrage de prévision employées pour la détermination des prévisions de consommation déterminées par le dispositif de recharge RECH de manière générale, et ce quelle que soit la méthode de prévision employée, par exemple une méthode de type GAM, une méthode d'agrégation d'experts ou bien une méthode d'apprentissage de type « Deep Learning » (qui vient de l'anglais et peut être traduit par apprentissage profond).

Avantageusement, les données d'apprentissage comprennent également des données d'apprentissage d'optimisation prévues pour affiner les modalités de détermination du profil de recharge Pr au cours du temps à partir des données employées.

Ces données incluent avantageusement des données de paramétrage de résolution, qui incluent par exemple des valeurs des facteurs de pondération des sous-métriques employées pour la construction du profil de recharge. Ces valeurs sont ajustées au cours du temps. Comme précédemment, ces ajustements sont avantageusement menés sur la base des données collectées lors du fonctionnement du dispositif de recharge RECH.

Les données d'apprentissage incluent avantageusement des données d'apprentissage de régulation configurées pour affiner le fonctionnement du module de régulation, en particulier du deuxième mode de fonctionnement, au cours du temps.

Ces données incluent par exemple des données de paramétrage de régulation définissant une ou plusieurs règles relatives à la détermination de la grandeur de régulation. Ces données de paramétrage de régulation conditionnent par exemple les valeurs résultant de l'analyse de tout ou partie des éléments retenus, l'ordre d'analyse des éléments retenus et/ou la nature des éléments retenus.

Comme précédemment, ces données sont avantageusement construites sur la base des données collectées au cours du fonctionnement du dispositif RECH.

Les données d'apprentissage sont par exemple construites par le module d'apprentissage sur la base de règles d'apprentissage qui définissent la configuration du module d'apprentissage.

Ces règles d'apprentissage reposent par exemple sur une méthode d'évaluation des décisions opérées par les composants du dispositif de recharge RECH (en particulier les modules OPT et REG). L'évaluation d'une décision, telle que par exemple la construction d'un profil de recharge donné ou la détermination d'une valeur de la grandeur de régulation, repose par exemple sur la comparaison entre cette décision et au moins une simulation de cette décision opérée avec un ou plusieurs autres éléments de la décision ayant été modifié (tel que par exemple, pour la détermination de la grandeur de régulation, la nature d'un élément retenu pour la détermination de P2, l'ordre des éléments et/ou les valeurs retenues pour l'analyse de chaque élément). Cette comparaison est configurée pour aboutir à l'évaluation de la décision mise en œuvre, par exemple via un ou plusieurs indicateurs quantifiés, et l'ajustement des données d'apprentissage en fonction des évaluations effectuées.

En pratique, ces règles d'apprentissage définissent la manière dont les différentes données d'apprentissage sont générées à partir des informations de fonctionnement du dispositif de recharge RECH collectées au cours du temps, et avantageusement la nature et la forme des données issues du fonctionnement du dispositif de recharge RECH qui sont employées pour la génération des données d'apprentissage via les règles d'apprentissage.

Comme indiqué précédemment, ces données d'apprentissage sont optionnellement employées par le module de régulation et le module d'optimisation pour la mise en œuvre de leur fonctionnalité. Lorsqu'elles le sont, elles sont employées pour les techniques de résolution mises en œuvre et/ou de construction des données utilisées en entrée pour cette résolution. Alternativement, quand elles ne le sont pas, les modules OPT et REG emploient d'autres valeurs, par exemple prédéterminées. On remarque que ces valeurs prédéterminées peuvent faire l'objet de modifications, par exemple sous la forme de mises à jour au cours desquelles les dispositifs de recharge RECH sont mis à jour, par exemple *in situ* par un opérateur, ou bien à distance.

Avantageusement, les dispositifs de recharge RECH sont configurés pour échanger entre eux tout ou partie de leurs données d'apprentissage. Aussi, avantageusement, les données d'apprentissage d'un dispositif de recharge donné sont également construites en fonction des données d'apprentissage reçues des autres dispositifs de recharge. Avantageusement, cette prise en compte des données d'apprentissage d'autres dispositifs de recharge est réalisée suite à une première phase au cours de laquelle les données d'apprentissage sont générées sur la seule base des données collectées par le dispositif de recharge.

Dans certaines réalisations, un dispositif de recharge donné reçoit des données d'apprentissage d'un sous-ensemble strict des dispositifs de recharge RECH du système (pouvant correspondre à un seul dispositif de recharge). Par exemple, le contenu de ce sous-ensemble peut être défini en fonction d'un ou plusieurs critères, par exemple de proximité géographique, de similarité en termes d'installations I respectives, d'équipements EQi couplés au point de livraison PDL correspondant, etc.

L'interface IHM comprend par exemple un affichage et/ou un ou plusieurs boutons de saisie (éventuellement combinés avec l'affichage sous forme d'un affichage tactile). Cette interface est prévue pour la saisie de données par l'utilisateur, telles que par exemple une date et heure choisies pour la fin de la plage temporelle de recharge et/ou pour la déconnexion du véhicule, ainsi que pour l'affichage d'informations à destination de l'utilisateur, telles que des informations relatives à la charge du véhicule notamment l'instant de fin de charge, l'état de charge correspondant, etc.

Le dispositif de coordination COOR est configuré pour coordonner le fonctionnement des dispositifs de recharge RECH du système.

À cet effet, il est configuré pour communiquer avec les différents dispositifs de recharge, et avantageusement ce de manière bidirectionnelle. En outre, il est configuré pour communiquer avec les points de livraison, notamment les dispositifs de comptage COMP, pour obtenir des mesures de consommation électrique relative au système SYS à l'échelle du réseau, du moins de la portion du réseau raccordée aux points de livraison PDL desservant les dispositifs de recharge RECH du système SYS.

Au moins deux approches sont possibles pour la configuration générale du dispositif de coordination COOR.

Dans une approche centralisée illustrée en Figure 1, le dispositif de coordination COOR est un dispositif autonome localisé à un endroit du système SYS.

Dans une approche distribuée, le dispositif de coordination COOR comprend une pluralité de modules de coordination respectivement agencés au niveau, à proximité, ou à l'intérieur de l'un des dispositifs de recharge RECH. Avantageusement, chaque dispositif de recharge RECH du système est alors couplé à un module de coordination. Dans le cadre de cette approche, chaque module de coordination est adapté pour communiquer avec les dispositifs de recharge RECH autres que celui auquel il est couplé.

La description qui suit sera faite en référence à l'approche centralisée, les éléments de transposition à l'approche distribuée étant également fournis.

Le dispositif de coordination COOR comprend une mémoire M et un ou plusieurs processeurs PROC configuré(s) pour exécuter des programmes contenus dans la mémoire M pour le bon fonctionnement du dispositif de coordination COOR, ainsi qu'une interface de communication pour communiquer avec les autres éléments du système SYS et les points de livraison PDL.

Le dispositif de coordination COOR est configuré pour déclencher une phase d'optimisation collective impliquant tout ou partie des dispositifs de recharge RECH, et visant à la construction, pour chaque dispositif RECH impliqué, d'un profil de recharge Pr tenant compte des autres dispositifs de recharge RECH. Autrement dit, cette phase vise à la construction de profils de recharge PR bâtis selon le deuxième cas par les dispositifs de recharge RECH.

Concernant les dispositifs de recharge RECH impliqués, plusieurs modalités sont possibles.

Dans un cas, tous les dispositifs de recharge RECH sont impliqués. Ceci se traduit notamment par la mise à jour des profils Pr des dispositifs de recharge ayant un profil de recharge courant.

Dans un autre cas, seuls les dispositifs de recharge réalisant couramment la recharge d'un véhicule électrique sont impliqués.

Dans un autre cas, seuls les dispositifs de recharge RECH s'étant déclarés comme dans l'attente d'une phase d'optimisation coordonnée sont impliqués. Cette déclaration est par exemple mise en œuvre de manière automatique par les dispositifs de recharge RECH, par exemple lors du branchement d'un véhicule électrique à ceux-ci. Cette déclaration est optionnellement conditionnée, par exemple par un réglage de préférence de l'utilisateur.

Ces groupes de dispositifs RECH peuvent être combinés, une phase d'optimisation coordonnée impliquant par exemple à la fois les dispositifs en cours de charge et ceux s'étant déclarés dans l'attente d'une telle phase.

Pour les besoins de la phase d'optimisation coordonnée, le dispositif de coordination COOR est configuré pour générer et envoyer au moins un signal de coordination SIGNi (où i indexe les dispositifs de recharge RECH du système SYS) à au moins un dispositif de recharge RECH.

En approche centralisée, il est configuré pour générer et envoyer un tel signal SIGNi à chaque dispositif RECH.

En approche distribuée, les différents modules de coordination sont configurés pour générer un signal SIGNi destiné au dispositif de recharge RECH auquel il est couplé, ce signal étant également fourni aux autres modules de coordination.

Chaque signal de coordination SIGNi est généré à partir de données de charge individuelles reçues des dispositifs de recharge impliqués.

Cette donnée de recharge individuelle correspond avantageusement à un profil de recharge Pr déterminé par le dispositif de recharge RECH considéré, comme détaillé ci-après.

Avantageusement, la phase d'optimisation coordonnée est menée itérativement.

Lors d'une étape initiale, chaque dispositif de recharge impliqué génère une donnée de recharge individuelle temporaire, ici un profil de recharge temporaire, préférentiellement selon le premier cas, c'est-à-dire à partir de seules informations locales. Ce profil de recharge temporaire est envoyé au dispositif de coordination COOR (à chaque module de coordination le cas échéant). Sur la base des différents profils de recharge (données de recharge individuelles de manière générale), le dispositif de coordination COOR génère les signaux de coordination et les fait parvenir aux dispositifs de recharge impliqués.

Lors de l'étape suivante, chaque dispositif de recharge met à jour le profil de recharge temporaire à partir du signal de coordination reçu. Une fois cette mise à jour faite, chaque dispositif de recharge fait parvenir une donnée de recharge individuelle modifiée pour tenir compte de la mise à jour du profil de recharge. Le dispositif de coordination COOR génère alors de nouveaux signaux de coordination sur la base des données de recharge individuelles mises à jour.

Cette étape est itérée jusqu'à parvenir, pour chaque dispositif de recharge RECH impliqué, à un profil de recharge final qui est retenu comme résultat de la phase d'optimisation coordonnée et qui devient alors le profil de recharge courant du dispositif de recharge (éventuellement en remplacement du précédent).

Les itérations cessent avantageusement en réponse à la vérification d'au moins une condition.

Une condition porte par exemple sur un nombre prédéterminé d'itérations que la phase d'optimisation coordonnée comprend. Alternativement ou parallèlement, une condition est construite pour être vérifiée lorsque qu'une grandeur représentative d'une stabilité des profils de recharge temporaires des dispositifs de recharge est vérifiée.

Cette condition est par exemple représentative du fait que les profils de recharge temporaires de tout ou partie des dispositifs de recharge impliqués sont peu ou pas modifiés lors d'au moins une nouvelle étape.

Cette condition repose par exemple sur l'emploi d'une ou plusieurs métriques dont les valeurs sont évaluées à chaque étape, la condition étant vérifiée quand cette ou ces métriques ont des valeurs qui vérifient un ou plusieurs critères, par exemple de variation de cette ou ces valeurs d'une étape à l'autre.

On remarque que le nombre d'itérations de cette phase peut varier d'un dispositif de recharge impliqué à un autre. Autrement dit, les dispositifs de recharge RECH peuvent ne pas mener toutes les étapes et sortir de la phase d'optimisation coordonnée indépendamment des autres dispositifs de recharge. Le profil de recharge résultant de cette phase est alors par exemple celui issu de la dernière étape menée, qui par exemple ne comprend alors que la mise à jour du profil de recharge sur la base du signal de coordination reçu lors de celle-ci. On remarque que le profil de recharge peut être un profil de recharge obtenu lors d'une étape intermédiaire quelconque.

Autrement dit, les conditions vérifiées peuvent être associées à un sous-ensemble strict des dispositifs RECH impliqués, notamment un sous-ensemble correspondant à un seul (ou plusieurs) dispositifs de recharge.

En ce qui concerne la teneur du signal de coordination SIGNi lui-même, plusieurs réalisations sont possibles.

Dans une réalisation, ce signal est représentatif de la somme de tout ou partie des profils de recharge des dispositifs de recharge impliqués (par exemple transmise sous une forme encodée). Autrement dit, le signal de coordination envoyé à un dispositif de recharge RECH est représentatif de la somme des données de recharge individuelles reçues lors de l'étape considérée.

Dans une réalisation, ce signal est représentatif d'un état du réseau d'alimentation. Plus spécifiquement, il est avantageusement représentatif d'un état du réseau tel qu'estimé pour un ou plusieurs intervalles de temps, dont au moins un intervalle futur. Cette estimation est déterminée à partir des données de recharge individuelles reçues.

En pratique, cette estimation porte sur l'état de l'intégralité du réseau ou d'une partie seulement, par exemple une portion du réseau, telle que la portion basse-tension et/ou la portion moyenne-tension via la ou lesquelles le dispositif de recharge RECH considéré est raccordé au réseau du réseau. Toutefois, cette estimation peut intégrer une portion du réseau plus vaste que la seule portion raccordant le point de livraison PDL associé au dispositif de recharge considéré au reste du réseau R.

Cette estimation inclut par exemple une répartition de la puissance électrique, de la tension électrique, de l'intensité électrique et/ou d'harmoniques sur la région du réseau R considérée, par exemple à chaque nœud et/ou sur chaque segment raccordant les nœuds de cette région. De telles répartitions sont par exemple connues sous le nom de « load flow » en anglais, qui peut être traduit par répartition des flux de puissance.

Le détail de la détermination d'une telle répartition à partir des profils de recharge de tout ou partie des dispositifs de recharge RECH reçus est par exemple connu.

Dans certaines réalisations avantageuses, le signal de coordination SIGNi est représentatif de ces deux éléments.

Pour la détermination d'un profil de recharge selon le deuxième cas sur la base du signal de coordination SIGNi, on emploie une approche multicritères dans le cadre de laquelle à chaque objectif est associé une métrique, les métriques étant pondérées par un facteur de forme choisie et combinées entre elles (par exemple de manière linéaire) pour former une métrique globale utilisée comme point de départ de la résolution du problème (par exemple via une méthode de résolution identique à celle employée dans le cadre du premier cas).

En ce qui concerne le ou les objectifs collectifs, la valeur de la métrique correspondante est prise égale au contenu du signal de coordination SIGNi qui se rapporte à cet objectif.

Autrement dit, si l'impact sur le réseau de la recharge des véhicules est employé comme objectif, le signal SIGNi comprend une donnée représentative de l'état estimé du réseau (i.e. sur la région considérée du réseau), cette donnée étant prise comme valeur pour la métrique correspondante (éventuellement après opération visant à la transformer en grandeur quantifiée). Si la puissance cumulée pour recharger les véhicules sur l'ensemble (ou sur partie) des dispositifs de recharge impliqués est employée, le signal de coordination comprend une donnée correspondante prise pour valeur de la métrique associée.

On remarque que le signal de coordination peut être différent d'un dispositif de recharge à un autre. Notamment, la région considérée pour un dispositif de recharge peut ne pas être identique à la région considérée pour un autre dispositif de recharge, de sorte que leurs signaux respectifs ne seront pas représentatifs de l'état d'une même région du réseau et seront donc *a priori* différents. En outre, la population de dispositifs de recharge considérés pour effectuer la somme des profils de recharge peut différer d'un dispositif de recharge à un autre.

La phase d'optimisation coordonnée est par exemple déclenchée en réponse à la vérification d'au moins une condition. Cette condition porte par exemple sur l'écoulement d'un laps de temps prédéterminé depuis la dernière phase d'optimisation coordonnée en date, optionnellement visant spécifiquement les dispositifs de recharge dans un état particulier (en cours de charge, hors charge, déclarés en attente d'une phase d'optimisation coordonnée, etc.). Alternativement ou parallèlement, une condition porte sur l'atteinte d'un nombre de dispositifs de recharge RECH dans un état prédéterminé (nombre optionnellement ramené au nombre de dispositifs RECH du système). Par exemple, si 20% ou plus des dispositifs de recharge se sont déclarés dans l'attente d'une phase de coordination, celle-ci est déclenchée.

Outre le déclenchement de cette phase d'optimisation coordonnée, le dispositif de coordination COOR est adapté pour déclencher une phase de régulation coordonnée.

Cette phase implique une pluralité de dispositifs de recharge RECH. En outre, elle implique tout ou partie des dispositifs de recharge RECH couramment en train de mener la recharge d'un véhicule VE.

Au cours de cette phase de régulation coordonnée, les dispositifs de recharge RECH impliqués sont basculés dans le sous-mode de fonctionnement collectif du deuxième mode de fonctionnement en réponse au déclenchement de cette phase. Ce déclenchement est par exemple provoqué par le dispositif de coordination COOR, qui envoie un signal à cet effet aux dispositifs de recharge RECH correspondant.

Le dispositif de coordination COOR est par exemple configuré pour déclencher une telle phase en réponse à la vérification d'au moins une condition.

Avantageusement, au moins une condition porte sur l'état de tout ou partie du réseau R. Avantageusement, elle porte sur l'écart entre une capacité d'une région (formant une partie du réseau ou couvrant tout le réseau), avantageusement une capacité de puissance électrique sur la région considérée définissant une valeur maximale de puissance pour cette région (correspondant par exemple mais non nécessairement à la puissance maximale effective que cette région est dimensionnée pour tolérer), et la somme des consommations électriques réalisées ou prévues pour les points de livraison PDL associés au système SYS et raccordés à cette région du réseau R.

Cette capacité de puissance électrique est par exemple prise comme étant la capacité de puissance du nœud et/ou du segment de cette région la plus dimensionnante, ou bien d'une combinaison de plusieurs capacités dimensionnantes. Ces éléments sont par exemple à disposition du dispositif de coordination, où ils y sont par exemple enregistrés en mémoire.

Par exemple, cet écart est quantifié pour un ou plusieurs intervalles comprenant un intervalle passé et/ou futur, la condition étant configurée pour être vérifiée si cet écart (ou une grandeur représentative de cet état) est inférieur à une valeur prédéterminée sur le ou les intervalles considérés. Comme indiqué, la somme des puissances électriques peut être une prévision réalisée au moins sur la base des consommations des différents points de livraison PDL considérés telles que mesurées, avantageusement au cours d'intervalles récents.

On remarque qu'une condition peut être associée à une région prédéterminée du réseau (telle qu'une partie des portions BT ou HT, ou même le réseau entier), la vérification de cette condition définissant alors les dispositifs de recharge impliqués dans la phase de régulation coordonnée comme étant ceux raccordés à la région associée à la condition vérifiée. Les éventuelles différentes conditions employées et respectivement associées à des régions différentes du réseau sont alors toutes analysées, par exemple à intervalles temporels réguliers.

On remarque en outre que des phases de régulation coordonnées peuvent être menées en parallèle. Elles impliquent alors respectivement des dispositifs de recharge RECH différents.

Dans le cadre d'une phase de régulation coordonnée, la puissance P2 est déterminée sur la base d'éléments choisis parmi les éléments parmi lesquels on choisit de déterminer P2 dans le cadre du sous-mode individuel. En outre, elle est déterminée sur la base du signal de coordination SIGNi reçu par le dispositif RECH considéré. En pratique, le contenu du signal SIGNi est alors spécifique à ce mode de fonctionnement.

Par exemple, pour la détermination de P2 dans ce sous-mode, on retient également une approche heuristique.

Pour un intervalle donné, une puissance P2 initiale est déterminée de manière analogue à la manière dont cela est fait pour le sous-mode individuel. Les puissances P2 initiales déterminées par les dispositifs RECH impliqués sont envoyées au dispositif de coordination, qui génère en retour un signal SIGNi pour chaque dispositif RECH. En fonction du contenu du signal SIGNi, la puissance P2 est ajustée.

Par exemple, cet ajustement est opéré par sélection parmi une pluralité de valeurs possibles de P2 en fonction du contenu du signal. Ces valeurs possibles sont par exemple déterminées en fonction de la valeur de P2 initiale envoyée au dispositif de coordination COOR. Optionnellement, au moins une de ces valeurs est fournie par le dispositif de coordination COOR, voire toutes le sont.

On remarque que cette détermination peut être menée sur la base de la grandeur de régulation en lieu et place de P2.

En outre, cette détermination peut être menée de manière itérative pour un ou plusieurs intervalles, la valeur de P2 initiale étant mise à jour et envoyée au dispositif de coordination COOR à chaque étape jusqu'à fin des itérations (par exemple déclenchée selon un critère de stabilité des solutions ou un nombre prédéterminé d'étapes pouvant varier d'un dispositif de recharge considéré à un autre).

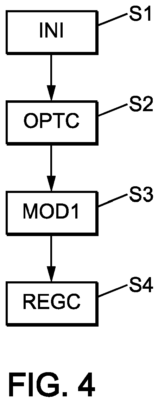

Un procédé de fonctionnement du système SYS va maintenant être décrit en référence aux Figures, notamment à la Figure 4.

Lors d'une étape initiale S1, au sein du système SYS, certains dispositifs de recharge RECH sont en cours de recharge, et les autres ne le sont pas. Certains de ceux qui ne le sont pas se sont par exemple déclarés dans l'attente d'une phase d'optimisation coordonnée auprès du dispositif de coordination.

Certains des dispositifs de recharge RECH disposent d'un profil de recharge Pr préalablement construit définissant le planning de la puissance électrique qu'il est prévu qu'ils délivrent à un véhicule électrique connecté au dispositif de recharge RECH pour sa recharge lors de la plage de recharge temporelle PTr correspondante, ou bien qu'ils mettent déjà en œuvre, typiquement avec leur module de régulation REG fonctionnant selon le premier mode de fonctionnement. D'autres dispositifs de recharge RECH, par exemple ceux récemment activés, ne disposent pas encore d'un tel profil de recharge.

Lors d'une étape S2, une phase d'optimisation coordonnée est déclenchée par le dispositif de coordination, celle-ci visant tout ou partie des dispositifs de recharge RECH. Ce déclenchement est par exemple opéré en réponse à la vérification de la ou des conditions correspondantes.

Le déroulement de la phase d'optimisation coordonnée est opéré tel que décrit-ci-dessus, et aboutit à l'établissement d'un profil de recharge Pr pour chaque dispositif RECH impliqué.

Lors d'une étape S3, les profils de recharge Pr déterminés lors de l'étape S2 sont mis en œuvre par les dispositifs de recharge RECH correspondants, qui fonctionnent alors selon le premier mode de fonctionnement ou bien selon le sous-mode individuel du deuxième mode de fonctionnement (éventuellement après basculement). À cet effet, la puissance Pout est régulée par les modules de régulation pour correspondre à la puissance P1 définie par le profil de recharge précédemment déterminé, respectivement à la puissance P2 notamment déterminée à partir de la puissance P1 du profil de recharge nouvellement déterminé.

Lors d'une étape S4, le dispositif de coordination COOR déclenche une phase de régulation coordonnée impliquant tout ou partie des dispositifs de recharge RECH.

Les dispositifs correspondants fonctionnent alors selon le sous-mode collectif du deuxième mode de fonctionnement (éventuellement après basculement s'ils ne mettaient pas en œuvre ce sous-mode préalablement), la puissance P2 correspondante étant alors déterminée comme indiqué ci-dessus.

En référence aux Figures 3A et 3B qui illustrent le fonctionnement du système selon la perspective d'un dispositif de recharge RECH donné, le dispositif de recharge RECH dont le fonctionnement est illustré se voit connecté au véhicule électrique qu'il a vocation à recharger à un instant donné.

À un instant t0 postérieur, le dispositif de recharge RECH est impliqué dans une phase d'optimisation coordonnée, qui aboutit à un profil de recharge Pr. Ceci a par exemple lieu après que le dispositif a déclaré qu'il attendait une telle phase au dispositif de coordination.

À l'instant t_init correspondant au début de la plage temporelle de recharge PTr, le dispositif de recharge RECH commence à mettre en œuvre le profil de recharge dans le premier mode de fonctionnement (à titre d'exemple) et fournit une puissance Pout régulée pour correspondre à la puissance P1 du profil de recharge (aux instants correspondants).

Parallèlement, il analyse les conditions de déclenchement d'une mise à jour du profil de recharge, ainsi que du basculement vers le deuxième mode de fonctionnement, en particulier le sous-mode individuel. Par exemple, à l'instant t1, ces conditions de basculement vers le sous-mode individuel du deuxième mode sont réunies, par exemple du fait que l'écart entre la prévision de consommation des équipements EQi (associés au point de livraison PDL correspondant) établie sur la base de mesures effectuées pendant la plage PTr et la prévision de cette consommation établie pour la construction du profil de recharge devient supérieur à la valeur prédéterminée associée.

Une fois dans ce sous-mode individuel, il délivre la puissance Pout régulée pour correspondre à la puissance P2 dont la valeur est déterminée selon les modalités de ce sous-mode. En outre, il analyse les conditions de basculement vers le premier mode de fonctionnement. Ces conditions sont par exemple réunies à l'instant t2, ici par exemple du fait que l'écart entre la prévision de consommation des équipements EQi déterminée sur la base de données de mesure DM récentes et les prévisions de cette consommation employées pour la construction du profil de recharge devient inférieure à la grandeur seuil employée pour déclencher ce basculement.

Il retourne alors au premier mode de fonctionnement dans lequel il délivre une puissance Pout régulée pour correspondre à la puissance P1.

À l'instant t3, le dispositif de coordination COOR détecte que les conditions de déclenchement d'une phase de régulation coordonnée sont réunies (ou la condition si une seule est employée). Ici, la condition porte sur le fait que l'écart entre la capacité de puissance électrique admissible sur une région notée r(R) du réseau, avantageusement raccordant le dispositif RECH au reste du réseau R, et la consommation cumulée des dispositifs de recharge RECH et des équipements EQi raccordés à cette région r(R) devient inférieure à une valeur seuil, et ce sur le ou les intervalles considérés (éventuellement futurs, auquel cas la puissance cumulée est prévisionnelle). Cette capacité de puissance est notée P(r) en Figure 3B, la puissance cumulée ci-dessus étant notée P_{Σ,r(R)}.

Les dispositifs RECH impliqués dont le dispositif de recharge RECH illustré basculent alors en sous-mode collectif du deuxième mode de fonctionnement, dans lequel ils délivrent une puissance Pout régulée pour correspondre à P2, dont la valeur est déterminée selon les modalités de ce sous-mode. Parallèlement à cela, le dispositif de recharge RECH surveille les conditions de basculement vers le premier mode, ainsi que les conditions de déclenchement d'une mise à jour du profil de recharge Pr (qui reste impliqué dans la détermination de la puissance P2 formant consigne de la puissance Pout dans le deuxième mode de fonctionnement, comme décrit ci-dessus).

Par exemple, l'une de ces conditions de déclenchement de la mise à jour du profil de recharge Pr est définie en fonction d'un écart entre l'énergie électrique effectivement fournie au véhicule électrique pendant la plage temporelle de recharge jusqu'à l'instant considéré (ou un instant passé choisi), et l'énergie électrique correspondant à la puissance électrique fournie dans la plage temporelle de recharge jusqu'à l'instant considéré (ou choisi) telle que définie par le profil de recharge Pr avant mise à jour.

Autrement dit, cette condition porte sur la comparaison entre l'énergie électrique cumulée effectivement fournie au véhicule par le dispositif de recharge pendant la plage PTr (c'est-à-dire un cumul temporel de Pout jusqu'à l'instant considéré) et l'énergie cumulée que le véhicule aurait reçue pendant la plage PTr si le profil de recharge avait été appliqué pour toute la portion écoulée de la plage PTr (un cumul temporel de P1 jusqu'à l'instant considéré).

Si cet écart, qui se présente par exemple sous la forme d'une différence, est supérieur à un seuil prédéterminé, le module d'optimisation est commandé pour la mise à jour du profil de recharge.

Cette mise à jour est alors menée sur la base de seules informations locales, c'est-à-dire qu'elle ne résulte pas d'une nouvelle phase d'optimisation coordonnée (qui peut toutefois être déclenchée peu de temps après ou encore peu de temps avant).

Avantageusement, ces conditions sont testées à chaque nouvel intervalle, du moins tant qu'elles n'ont pas été vérifiées.

Avantageusement, une fois ces conditions vérifiées et la mise à jour réalisée, l'analyse des conditions de mise à jour est interrompue pendant un laps de temps prédéterminé, correspondant par exemple à un nombre prédéterminé d'intervalles.

On remarque qu'une condition qui peut être employée porte sur un changement des index tarifaires utilisés pour la détermination du tarif de l'énergie électrique par le module d'optimisation.

Par exemple, si une grandeur quantifiant un écart entre les anciens index et les nouveaux index est supérieure à une valeur seuil choisie, le module d'optimisation est rappelé pour mise à jour du profil de recharge.

Cette condition peut être utilisée seule, ou en combinaison d'au moins une autre.

Comme illustré sur la Figure2A, les conditions de déclenchement sont par exemple détectées comme vérifiée à l'instant t4. La mise à jour est menée et se traduit par le remplacement des valeurs de P1 prévues pour les intervalles futurs par de nouvelles valeurs, qui sont prises en compte en lieu et place des valeurs initiales pour ces intervalles à partir de cet instant (t5) (l'instant de fin de la plage temporelle de recharge associée au profil mis à jour ayant été représenté comme concordant avec celui du profil de recharge initial).

Les conditions de modification du fonctionnement du dispositif de recharge, en particulier du module de régulation, restent analysés jusqu'à la fin de la recharge du véhicule.

L'invention présente plusieurs avantages.

En effet, elle permet la prise en compte de phénomènes affectant les réseaux électriques de manière très fine et souple dans un contexte de recharge de véhicules électriques. En outre, ceci s'applique à un réseau ou une portion de ce réseau d'échelle aisément adaptable.

En outre, les différents modes de fonctionnement du système permettent une très grande richesse de modulation des phénomènes pris en considération de manière prépondérante pour gouverner la recharge des véhicules à un instant donné.

En outre, il est évolutif, en ce qu'il procède à un ajustement de son fonctionnement par apprentissage à partir des données collectées par lui.

On remarque que les écarts dont il est fait mention dans la description ci-dessus sont par exemple des écarts en valeur absolue. En outre, ces écarts peuvent être évalués par l'intermédiaire de grandeurs qui représentent ces écarts. Autrement dit, un écart peut correspondre à un objet différant d'une différence.

On remarque que les prévisions réalisées pour les besoins du module d'optimisation et/ou du module de régulation peuvent en pratique être construites par un module dédié de prévision. Ce module communique les prévisions idoines au module correspondant, par exemple sur requête.

On remarque en outre qu'on peut procéder à la construction du profil Pr, en particulier selon le premier cas, en employant une population de solutions candidates pour chacune desquelles des valeurs de sous-métriques sont déterminées, fournissant par-là une valeur de la métrique. Une sélection est ensuite opérée parmi les solutions candidates sur la base des valeurs respectives des métriques de ces solutions. Par exemple, à chaque solution candidate correspond une prévision de consommation donnée, et/ou à des valeurs données des facteurs de pondération.

Par ailleurs, dans le cas d'une configuration distribuée du dispositif de coordination COOR, en particulier pour les modules de coordination faisant partie du dispositif de recharge RECH auquel ils sont couplés, chaque module de coordination correspondant est avantageusement ségrégué du reste du dispositif de recharge, notamment en termes d'accès aux données qui sont contenues dans le module de coordination. En particulier, le module de coordination est alors configuré pour ne pas autoriser l'accès aux données qu'il stocke, notamment à l'utilisateur du dispositif de recharge RECH.

On remarque que ces configurations peuvent être conjointement employées, le dispositif de coordination comprenant une composante isolée et à l'écart des dispositifs de recharge RECH, et des modules de coordination respectivement couplés aux dispositifs de recharge RECH d'un sous-ensemble strict des dispositifs de recharge RECH du système SYS.

On remarque en outre que dans le cadre de la description ci-dessus, il est prévu que chaque dispositif de recharge RECH présente les fonctionnalités ci-dessus. Toutefois, ceci peut ne pas être le cas.

Par exemple, certains dispositifs RECH (voire tous dans certaines réalisations) peuvent ne disposer que du seul sous-mode collectif. En outre, ils peuvent être configurés pour ne mettre en œuvre que des profils de recharge issus d'une phase d'optimisation coordonnée. En outre, les différents dispositifs de recharge RECH peuvent présenter des modalités de configurations différentes. Par exemple, les conditions employées pour le basculement entre des modes de fonctionnement du module de régulation peuvent différer, typiquement de par la population de conditions employée, les valeurs seuils employées, etc.

## Revendications

1. Système adapté pour la recharge de véhicules électriques, le système comprenant :
- une pluralité de dispositifs de recharge (RECH) respectivement adaptés pour fournir une puissance électrique régulée (Pout) pour effectuer la recharge en énergie électrique d'au moins un véhicule électrique (VE), les dispositifs de recharge étant destinés à être connectés à un réseau d'alimentation en énergie électrique (R), chaque dispositif de recharge (RECH) étant destiné à être connecté audit réseau (R) par l'intermédiaire d'un point de livraison (PDL) auquel le dispositif de recharge est configuré pour soutirer de l'énergie électrique pour fournir ladite puissance électrique régulée, chaque dispositif de recharge (RECH) comprenant :
- un module d'optimisation (OPT) configuré pour construire un profil de recharge (Pr) associé à une plage temporelle de recharge (PTr) et représentatif d'une première puissance électrique de recharge (P1) adaptée pour être délivrée par le dispositif de recharge au cours de ladite plage temporelle de recharge pour la recharge du véhicule électrique, et
- un module de régulation (REG) adapté pour réguler la puissance électrique fournie par le dispositif de recharge, le module de régulation comprenant:
- un premier mode de fonctionnement dans lequel le module de régulation (REG) est configuré pour réguler la puissance électrique (Pout) délivrée en sortie pour faire correspondre ladite puissance électrique (Pout) à la première puissance électrique de recharge (P1) pendant au moins une partie de la plage temporelle de recharge (PTr) associée, et
- un deuxième mode de fonctionnement dans lequel il est configuré pour réguler la puissance électrique délivrée en sortie (Pout) pour la faire correspondre à une deuxième puissance électrique de recharge (P2), **caractérisé en ce que** le système comprenant
- un dispositif de coordination (COOR) adapté pour communiquer avec les dispositifs de recharge (RECH), le dispositif de coordination (COOR) étant adapté pour :
- déclencher une phase d'optimisation coordonnée impliquant un groupe de dispositifs de recharge (RECH) comprenant tout ou partie des dispositifs de recharge dudit système et au cours de laquelle chaque dispositif de recharge (RECH) impliqué construit un profil de recharge (Pr) destiné à être mis en œuvre dans le premier mode de fonctionnement au moins à partir d'une part d'une donnée de recharge individuelle générée par le module d'optimisation (OPT) correspondant au moins à partir de prévisions de consommation électrique d'autres équipements électriques (EQi) raccordés au point de livraison correspondant pour la plage de recharge temporelle (PTr), et d'autre part d'un signal de coordination (SIGNi) généré par le dispositif de coordination (COOR) à partir des données de recharge individuelles générées par tout ou partie des dispositifs de recharge (RECH) impliqués, et
- déclencher à un instant considéré une phase de régulation coordonnée impliquant tout ou partie des dispositifs de recharge (RECH) du système (SYS), au cours de laquelle le module de régulation (REG) de chacun desdits dispositifs de recharge impliqués dans la phase de régulation coordonnée met en œuvre le deuxième mode de fonctionnement, la deuxième puissance électrique de recharge (P2) correspondante étant déterminée au moins à partir d'une donnée d'état du réseau d'alimentation en énergie électrique déterminée par le dispositif de coordination à partir de mesures représentatives d'un état du réseau effectuées lors d'au moins un intervalle de temps précédent ledit instant considéré.

2. Système selon la revendication 1, dans lequel au cours de la phase de régulation coordonnée, les dispositifs de recharge (RECH) impliqués sont configurés pour mettre en œuvre un sous-mode de fonctionnement collectif du deuxième mode de fonctionnement, le deuxième mode de fonctionnement du module de régulation de chaque dispositif de recharge (RECH) présentant en outre un sous-mode de fonctionnement individuel dans lequel la deuxième puissance électrique de recharge est déterminée indépendamment de ladite donnée d'état du réseau d'alimentation en énergie électrique (R) déterminée par le dispositif de coordination (COOR) à partir de mesures représentatives d'un état du réseau effectuées lors d'un intervalle de temps précédent ledit instant considéré.

3. Système selon la revendication 2, dans lequel, dans le sous-mode de fonctionnement individuel, le module de régulation (REG) est configuré pour déterminer la deuxième puissance électrique de recharge (P2) au moins en fonction de données de consommation électrique (DM) d'autres équipements électriques raccordés au point de livraison correspondant mesurée au cours de ladite plage temporelle (PTr) et de la première puissance de recharge (P1) du profil de recharge (PTr).

4. Système selon l'une quelconque des revendications précédentes, dans lequel, pour les dispositifs de recharge (RECH) impliqués dans une phase d'optimisation coordonnée et présentant un profil de recharge (RECH) dont la plage temporelle de recharge (PTr) inclut l'instant de début de la phase d'optimisation coordonnée, le profil de recharge déterminé lors de la phase d'optimisation coordonnée remplace ledit profil de recharge une fois déterminé.

5. Système selon l'une quelconque des revendications précédentes, dans lequel le module d'optimisation (OPT) d'un dispositif de recharge (RECH) est configuré pour déterminer la donnée individuelle de recharge en outre au moins à partir d'un élément parmi :
- un comportement en recharge d'un dispositif de stockage d'énergie électrique (STO) du véhicule électrique que le dispositif de recharge est destiné à recharger,
- un besoin en énergie électrique du dispositif de stockage d'énergie électrique (STO) du véhicule électrique pour la recharge dudit dispositif de stockage d'énergie électrique (VE),
- un tarif de l'énergie électrique représentatif d'un coût de l'énergie électrique à fournir au dispositif de stockage d'énergie électrique (STO) pour sa recharge,
- un comportement électrotechnique d'un dispositif de protection électrique (PROT) du point de livraison (PDL) associé,
- une puissance électrique maximale que le dispositif de recharge (RECH) est dimensionné pour délivrer.

6. Système selon l'une quelconque des revendications précédentes, dans lequel, pour la phase d'optimisation coordonnée, chaque module de régulation (RECH) est configuré pour générer le profil de recharge (Pr) à l'issue d'un processus itératif dont chaque étape intermédiaire comprend la génération d'une donnée de recharge individuelle temporaire, l'envoi de ladite donnée de recharge individuelle temporaire au dispositif de coordination (COOR), et la réception d'un signal de coordination temporaire généré par le dispositif de coordination (COOR) à partir des données de recharge individuelles temporaires des différents dispositifs de recharge (RECH) impliqués, la donnée de recharge individuelle temporaire étant construite en tant que donnée de recharge individuelle de l'étape précédente mise à jour à partir du signal de coordination temporaire reçu lors de l'étape précédente, le profil de recharge (Pr) étant construit à partir de la donnée de recharge individuelle construite mise à jour à partir du signal de coordination reçu lors de la dernière étape ou d'une étape intermédiaire, l'étape initiale étant menée à partir de la donnée de recharge individuelle et du signal de coordination (SIGNi).

7. Système selon l'une quelconque des revendications précédentes, dans lequel le dispositif de coordination (COOR) est configuré pour générer le signal de coordination au moins à partir d'une estimation de l'impact sur le réseau d'alimentation électrique des données de recharge individuelles des dispositifs de recharge impliqués dans la phase d'optimisation coordonnée.

8. Système selon l'une quelconque des revendications précédentes, dans lequel le dispositif de coordination (COOR) est configuré pour générer le signal de coordination au moins à partir de la somme des données de recharge individuelles.

9. Système selon l'une quelconque des revendications précédentes, dans lequel chaque donnée de recharge individuelle est représentative d'un profil de recharge définissant des valeurs de la première puissance électrique de recharge sur une plage temporelle de recharge (PTr).

10. Système selon l'une quelconque des revendications précédentes, dans lequel le dispositif de coordination est configuré pour déclencher la phase de régulation coordonnée en réponse à la vérification d'au moins une condition dont une condition au moins porte sur une comparaison entre une capacité d'une région du réseau d'alimentation électrique couvrant tout ou partie dudit réseau d'alimentation et une consommation électrique générée par les dispositifs de recharge (RECH) et les autres équipements électriques (EQi) raccordés à ladite région.

11. Système selon la revendication 10, dans lequel les dispositifs de recharge (RECH) destinés à être impliqués dans ladite phase de régulation coordonnée sont ceux raccordés à ladite région.

12. Système selon l'une quelconque des revendications précédentes, dans lequel le dispositif de coordination se présente sous la forme d'un dispositif distant des dispositifs de recharge.

13. Système selon l'une quelconque des revendications 1 à 11, dans lequel le dispositif de coordination comprend une pluralité de modules de coordination respectivement couplés à l'un des dispositifs de recharge du système, chaque module de coordination étant configuré pour communiquer avec les autres dispositifs de recharge (RECH) du système et pour fournir le signal de coordination au dispositif de recharge auquel il est associé.

14. Procédé de recharge d'une pluralité de véhicules électriques au moyen d'un système comprenant :
- une pluralité de dispositifs de recharge (RECH) respectivement adaptés pour fournir une puissance électrique régulée (Pout) pour effectuer la recharge en énergie électrique d'au moins un véhicule électrique (VE), les dispositifs de recharge étant destinés à être connectés à un réseau d'alimentation en énergie électrique (R), chaque dispositif de recharge (RECH) étant destiné à être connecté audit réseau (R) par l'intermédiaire d'un point de livraison (PDL) auquel le dispositif de recharge est configuré pour soutirer de l'énergie électrique pour fournir ladite puissance électrique régulée, chaque dispositif de recharge (RECH) comprenant :
- un module d'optimisation (OPT) configuré pour construire un profil de recharge (Pr) associé à une plage temporelle de recharge (PTr) et représentatif d'une première puissance électrique de recharge (P1) adaptée pour être délivrée par le dispositif de recharge au cours de ladite plage temporelle de recharge pour la recharge du véhicule électrique, et
- un module de régulation (REG) adapté pour réguler la puissance électrique fournie par le dispositif de recharge, le module de régulation comprenant:
- un premier mode de fonctionnement dans lequel le module de régulation (REG) est configuré pour réguler la puissance électrique (Pout) délivrée en sortie pour faire correspondre ladite puissance électrique (Pout) à la première puissance électrique de recharge (P1) pendant au moins une partie de la plage temporelle de recharge (PTr) associée, et
- un deuxième mode de fonctionnement dans lequel il est configuré pour réguler la puissance électrique délivrée en sortie (Pout) pour la faire correspondre à une deuxième puissance électrique de recharge (P2),
- un dispositif de coordination (COOR) adapté pour communiquer avec les dispositifs de recharge (RECH), le procédé **caractérisé par** comprenant:
- réaliser une phase d'optimisation coordonnée impliquant un groupe de dispositifs de recharge (RECH) comprenant tout ou partie des dispositifs de recharge dudit système et au cours de laquelle chaque dispositif de recharge (RECH) impliqué construit un profil de recharge (Pr) destiné à être mis en œuvre dans le premier mode de fonctionnement au moins à partir d'une part d'une donnée de recharge individuelle générée par le module d'optimisation (OPT) correspondant au moins à partir de prévisions de consommation électrique d'autres équipements électriques (EQi) raccordés au point de livraison correspondant pour la plage de recharge temporelle (PTr), et d'autre part d'un signal de coordination (SIGNi) généré par le dispositif de coordination (COOR) à partir des données de recharge individuelles générées par tout ou partie des dispositifs de recharge (RECH) impliqués, et
- réaliser à un instant considéré une phase de régulation coordonnée impliquant tout ou partie des dispositifs de recharge (RECH) du système (SYS), au cours de laquelle le module de régulation (REG) de chacun desdits dispositifs de recharge impliqués dans la phase de régulation coordonnée met en œuvre le deuxième mode de fonctionnement, la deuxième puissance électrique de recharge (P2) correspondante étant déterminée au moins à partir d'une donnée d'état du réseau d'alimentation en énergie électrique déterminée par le dispositif de coordination à partir de mesures représentatives d'un état du réseau effectuées lors d'au moins un intervalle de temps précédent ledit instant considéré.

15. Programme informatique comprenant des instructions pour la mise en œuvre du procédé selon la revendication 14 lorsqu'exécutées par un processeur.

## Patentansprüche

1. System, welches für das Laden von Elektrofahrzeugen geeignet ist, wobei das System umfasst:
- eine Vielzahl von Ladevorrichtungen (RECH), die jeweils dazu geeignet sind, eine geregelte elektrische Leistung (Pout) zu liefern, um das Laden wenigstens eines Elektrofahrzeugs (VE) mit elektrischer Energie zu bewirken, wobei die Ladevorrichtungen dazu bestimmt sind, an ein Netz zur Versorgung mit elektrischer Energie (R) angeschlossen zu werden, wobei jede Ladevorrichtung (RECH) dazu bestimmt ist, über einen Lieferpunkt (PDL), an dem die Ladevorrichtung dazu konfiguriert ist, elektrische Energie zur Lieferung der geregelten elektrischen Leistung zu entnehmen, mit dem Netz (R) verbunden zu werden, wobei jede Ladevorrichtung (RECH) umfasst:
- ein Optimierungsmodul (OPT), das dazu konfiguriert ist, ein Ladeprofil (Pr) zu konstruieren, das einem Ladezeitbereich (PTr) zugeordnet ist und repräsentativ für eine erste elektrische Ladeleistung (P1) ist, die dazu geeignet ist, von der Ladevorrichtung während des Ladezeitbereichs zum Laden des Elektrofahrzeugs abgegeben zu werden, und
- ein Regelmodul (REG), das dazu geeignet ist, die von der Ladevorrichtung gelieferte elektrische Leistung zu regeln, wobei das Regelmodul umfasst:
- einen ersten Betriebsmodus, in dem das Regelmodul (REG) dazu konfiguriert ist, die ausgegebene elektrische Leistung (Pout) zu regeln, um die elektrische Leistung (Pout) mit der ersten elektrischen Ladeleistung (P1) während wenigstens eines Teils des zugeordneten Ladezeitbereichs (PTr) in Übereinstimmung zu bringen, und
- einen zweiten Betriebsmodus, in dem es dazu konfiguriert ist, die ausgegebene elektrische Leistung (Pout) so zu regeln, dass sie einer zweiten elektrischen Ladeleistung (P2) entspricht, **dadurch gekennzeichnet, dass** das System Folgendes umfasst:
- eine Koordinierungsvorrichtung (COOR), die dazu geeignet ist, mit den Ladevorrichtungen (RECH) zu kommunizieren, wobei die Koordinierungsvorrichtung (COOR) dazu geeignet ist:
- eine koordinierte Optimierungsphase auszulösen, die eine Gruppe von Ladevorrichtungen (RECH) einbezieht, die alle oder einen Teil der Ladevorrichtungen des Systems umfasst, und in deren Verlauf jede beteiligte Ladevorrichtung (RECH) ein Ladeprofil (Pr) konstruiert, das dazu bestimmt ist, in dem ersten Betriebsmodus eingesetzt zu werden, wenigstens basierend auf einerseits einer individuellen Ladeangabe, die von dem entsprechenden Optimierungsmodul (OPT) wenigstens basierend auf Prognosen des Stromverbrauchs anderer elektrischer Geräte (EQi), die an den entsprechenden Lieferpunkt für den zeitlichen Ladebereich (PTr) angeschlossen sind, generiert wird und andererseits auf einem Koordinierungssignal (SIGNi), das von der Koordinierungsvorrichtung (COOR) basierend auf individuellen Ladedaten erzeugt wird, die von allen oder einem Teil der beteiligten Ladevorrichtungen (RECH) erzeugt werden, und
- zu einem bestimmten Zeitpunkt eine koordinierte Regelungsphase auszulösen, an der alle oder ein Teil der Ladevorrichtungen (RECH) des Systems (SYS) beteiligt sind und in deren Verlauf das Regelmodul (REG) jeder der an der koordinierten Regelungsphase beteiligten Ladevorrichtungen den zweiten Betriebsmodus umsetzt, wobei die entsprechende zweite elektrische Ladeleistung (P2) wenigstens anhand von Zustandsdaten des Netzes zur Versorgung mit elektrischer Energie bestimmt wird, die von der Koordinierungsvorrichtung anhand von repräsentativen Messungen eines Netzzustands bestimmt werden, die während wenigstens eines dem bestimmten Zeitpunkt vorausgehenden Zeitintervalls durchgeführt werden.

2. System nach Anspruch 1, wobei während der koordinierten Regelungsphase die beteiligten Ladevorrichtungen (RECH) dazu konfiguriert sind, einen kollektiven Betriebsuntermodus des zweiten Betriebsmodus zu implementieren, wobei der zweite Betriebsmodus des Regelmoduls jeder Ladevorrichtung (RECH) ferner einen individuellen Betriebsuntermodus aufweist, in dem die zweite elektrische Ladeleistung unabhängig von den Zustandsdaten des elektrischen Energieversorgungsnetzes (R) bestimmt wird, die von der Koordinierungsvorrichtung (COOR) anhand von repräsentativen Messungen eines Netzzustands bestimmt werden, die während eines Zeitintervalls vor dem bestimmten Zeitpunkt durchgeführt wurden.

3. System nach Anspruch 2, wobei in dem individuellen Unterbetriebsmodus das Regelmodul (REG) dazu konfiguriert ist, die zweite elektrische Ladeleistung (P2) wenigstens auf der Grundlage von Daten zum Stromverbrauch (DM) anderer an den entsprechenden Lieferpunkt angeschlossener elektrischer Geräte, die während des Zeitbereichs (PTr) gemessen wurden, und der ersten Ladeleistung (P1) des Ladeprofils (PTr) zu bestimmen.

4. System nach einem der vorhergehenden Ansprüche, wobei für die Ladevorrichtungen (RECH), die an einer koordinierten Optimierungsphase beteiligt sind und ein Ladeprofil (RECH) aufweisen, dessen Ladezeitbereich (PTr) den Startzeitpunkt der koordinierten Optimierungsphase einschließt, das in der koordinierten Optimierungsphase ermittelte Ladeprofil das einmal ermittelte Ladeprofil ersetzt.

5. System nach einem der vorhergehenden Ansprüche, wobei das Optimierungsmodul (OPT) einer Ladevorrichtung (RECH) dazu konfiguriert ist, die individuellen Ladedaten zusätzlich wenigstens aus einem der folgenden Elemente zu bestimmen:
- einem Ladeverhalten einer elektrischen Energiespeichervorrichtung (STO) des Elektrofahrzeugs, das die Ladevorrichtung laden soll,
- einem Bedarf an elektrischer Energie der Speichervorrichtung für elektrische Energie (STO) des Elektrofahrzeugs zum Laden der Speichervorrichtung für elektrische Energie (VE),
- einem Tarif für elektrische Energie, der repräsentativ für die Kosten der elektrischen Energie ist, die der Speichervorrichtung für elektrische Energie (STO) für ihr Laden zugeführt werden muss,
- einem elektrotechnischen Verhalten einer elektrischen Schutzvorrichtung (PROT) des zugeordneten Lieferpunkts (PDL),
- einer maximalen elektrischen Leistung, für deren Abgabe die Ladevorrichtung (RECH) ausgelegt ist.

6. System nach einem der vorhergehenden Ansprüche, wobei für die koordinierte Optimierungsphase jedes Regelmodul (RECH) dazu konfiguriert ist, das Ladeprofil (Pr) am Ende eines iterativen Prozesses zu erzeugen, bei dem jeder Zwischenschritt die Erzeugung einer temporären individuellen Ladeangabe, das Senden der temporären individuellen Ladeangabe an die Koordinierungsvorrichtung (COOR) und den Empfang eines temporären Koordinierungssignals umfasst, das von der Koordinierungsvorrichtung (COOR) aus den temporären individuellen Ladedaten der verschiedenen beteiligten Ladevorrichtungen (RECH) erzeugt wird, wobei die temporären individuellen Ladedaten als individuelle Ladedaten des vorherigen Schrittes konstruiert werden, die anhand des temporären Koordinierungssignals aktualisiert wurden, das im vorherigen Schritt empfangen wurde, wobei das Ladeprofil (Pr) anhand der konstruierten individuellen Ladedaten konstruiert wird, die anhand des Koordinierungssignals aktualisiert wurden, das im letzten Schritt oder in einem Zwischenschritt empfangen wurde, wobei der Anfangsschritt anhand der individuellen Ladedaten und des Koordinierungssignals (SIGNi) durchgeführt wird.

7. System nach einem der vorhergehenden Ansprüche, wobei die Koordinierungsvorrichtung (COOR) dazu konfiguriert ist, das Koordinierungssignal wenigstens aus einer Schätzung der Auswirkungen der individuellen Ladedaten der an der koordinierten Optimierungsphase beteiligten Ladevorrichtungen auf das Stromversorgungsnetz zu erzeugen.

8. System nach einem der vorhergehenden Ansprüche, wobei die Koordinierungsvorrichtung (COOR) dazu konfiguriert ist, das Koordinierungssignal wenigstens aus der Summe der individuellen Ladedaten zu erzeugen.

9. System nach einem der vorhergehenden Ansprüche, wobei jede individuelle Ladeangabe repräsentativ für ein Ladeprofil ist, das Werte der ersten elektrischen Ladeleistung über einen Ladezeitbereich (PTr) definiert.

10. System nach einem der vorhergehenden Ansprüche, wobei die Koordinierungsvorrichtung dazu konfiguriert ist, die koordinierte Regulierungsphase als Reaktion auf die Überprüfung wenigstens einer Bedingung auszulösen, von der sich wenigstens eine Bedingung auf einen Vergleich einer Kapazität eines Bereichs des Stromversorgungsnetzes, die das gesamte Stromversorgungsnetz oder einen Teil davon abdeckt, mit einem Stromverbrauch bezieht, der von den Ladevorrichtungen (RECH) und anderen elektrischen Geräten (EQi), die an diesen Bereich angeschlossen sind, erzeugt wird.

11. System nach Anspruch 10, wobei die Ladevorrichtungen (RECH), die in die koordinierte Regulierungsphase einbezogen werden sollen, diejenigen sind, die an den genannten Bereich angeschlossen sind.

12. System nach einem der vorhergehenden Ansprüche, wobei die Koordinierungsvorrichtung als eine von den Ladevorrichtungen entfernte Vorrichtung vorliegt.

13. System nach einem der Ansprüche 1 bis 11, wobei die Koordinierungsvorrichtung eine Vielzahl von Koordinierungsmodulen umfasst, die jeweils mit einer der Ladevorrichtungen des Systems gekoppelt sind, wobei jedes Koordinierungsmodul dazu konfiguriert ist, mit den anderen Ladevorrichtungen (RECH) des Systems zu kommunizieren und das Koordinierungssignal an die Ladevorrichtung zu liefern, zu der es zugeordnet ist.

14. Verfahren zum Laden einer Vielzahl von Elektrofahrzeugen mit Hilfe eines Systems, das Folgendes umfasst:
- eine Vielzahl von Ladevorrichtungen (RECH), die jeweils dazu geeignet sind, eine geregelte elektrische Leistung (Pout) zu liefern, um das Laden wenigstens eines Elektrofahrzeugs (EV) mit elektrischer Energie zu bewirken, wobei die Ladevorrichtungen dazu bestimmt sind, mit einem elektrischen Energieversorgungsnetz (R) verbunden zu werden, wobei jede Ladevorrichtung (RECH) dazu bestimmt ist, mit dem Netz (R) über einen Lieferpunkt (PDL) verbunden zu werden, an dem die Ladevorrichtung dazu konfiguriert ist, elektrische Energie zu entnehmen, um die geregelte elektrische Leistung zu liefern, wobei jede Ladevorrichtung (RECH) Folgendes umfasst:
- ein Optimierungsmodul (OPT), das dazu konfiguriert ist, ein Ladeprofil (Pr) zu konstruieren, das einem Ladezeitbereich (PTr) zugeordnet ist und repräsentativ für eine erste elektrische Ladeleistung (P1) ist, die dazu geeignet ist, von der Ladevorrichtung während des Ladezeitbereichs zum Laden des Elektrofahrzeugs abgegeben zu werden, und
- ein Regelmodul (REG), das dazu geeignet ist, die von der Ladevorrichtung gelieferte elektrische Leistung zu regeln, wobei das Regelmodul umfasst:
- einen ersten Betriebsmodus, in dem das Regelmodul (REG) dazu konfiguriert ist, die ausgegebene elektrische Leistung (Pout) zu regeln, um die elektrische Leistung (Pout) mit der ersten elektrischen Ladeleistung (P1) während wenigstens eines Teils des zugeordneten Ladezeitbereichs (PTr) in Übereinstimmung zu bringen, und
- einen zweiten Betriebsmodus, in dem sie dazu konfiguriert ist, die ausgegebene elektrische Leistung (Pout) so zu regeln, dass diese mit einer zweiten elektrischen Ladeleistung (P2) übereinstimmt,
- eine Koordinierungsvorrichtung (COOR), die dazu geeignet ist, mit den Ladevorrichtungen (RECH) zu kommunizieren, wobei das Verfahren **dadurch gekennzeichnet ist, dass** es Folgendes umfasst:
- Durchführen einer koordinierten Optimierungsphase, an der eine Gruppe von Ladevorrichtungen (RECH) beteiligt ist, die alle oder einen Teil der Ladevorrichtungen des Systems umfasst und in deren Verlauf jede beteiligte Ladevorrichtung (RECH) ein Ladeprofil (Pr) konstruiert, das dazu bestimmt ist, in dem ersten Betriebsmodus eingesetzt zu werden, wenigstens basierend auf einerseits einer individuellen Ladeangabe, die von dem entsprechenden Optimierungsmodul (OPT) wenigstens basierend auf den Prognosen des elektrischen Verbrauchs anderer elektrischer Geräte (EQi), die an den entsprechenden Lieferpunkt für den zeitlichen Ladebereich (PTr) angeschlossen sind, erzeugt wird, und andererseits eines Koordinierungssignals (SIGNi), das von der Koordinierungsvorrichtung (COOR) basierend auf individuellen Ladedaten erzeugt wird, die von allen oder einem Teil der beteiligten Ladevorrichtungen (RECH) erzeugt werden, und
- zu einem bestimmten Zeitpunkt Durchführen einer koordinierten Regelungsphase, an der alle oder ein Teil der Ladevorrichtungen (RECH) des Systems (SYS) beteiligt sind, in deren Verlauf das Regelungsmodul (REG) jeder der an der koordinierten Regelungsphase beteiligten Ladevorrichtungen den zweiten Betriebsmodus einsetzt, wobei die entsprechende zweite elektrische Ladeleistung (P2) wenigstens basierend auf einer Zustandsangabe des Netzes zur Versorgung mit elektrischer Energie bestimmt wird, das von der Koordinierungsvorrichtung basierend auf repräsentativen Messungen eines Netzzustands bestimmt wird, die während wenigstens eines dem bestimmten Zeitpunkt vorausgehenden Zeitintervalls durchgeführt wurden.

15. Computerprogramm, das Anweisungen zur Durchführung des Verfahrens nach Anspruch 14 enthält, wenn es von einem Prozessor ausgeführt wird.

## Claims

1. System adapted for charging electric vehicles, the system comprising:
- a plurality of charging devices (RECH) respectively adapted to supply regulated electric power (Pout) in order to charge at least one electric vehicle (VE) with electrical energy, the charging devices being intended to be connected to an electric power supply grid (R), each charging device (RECH) being intended to be connected to said grid (R) via a point of delivery (PDL) from which the charging device is configured to draw electrical energy in order to supply said regulated electric power, each charging device (RECH) comprising:
- an optimization module (OPT) configured to construct a charging profile (Pr) associated with a charging time slot (PTr) and representative of a first charging power (PI) suitable for being supplied by the charging device during said charging time slot in order to charge the electric vehicle, and
- a regulation module (REG) adapted to regulate the electric power supplied by the charging device, the regulation module comprising:
- a first mode of operation in which the regulation module (REG) is configured to regulate the electric power (Pout) that is output in order to match said electric power (Pout) to the first charging power (PI) during at least a portion of the associated charging time slot (PTr), and
- a second mode of operation in which it is configured to regulate the electric power that is output (Pout) in order to match it to a second charging power (P2), **characterized in that** the system comprises
- a coordination device (COOR) adapted for communicating with the charging devices (RECH), the coordination device (COOR) being suitable for:
- triggering a coordinated optimization phase involving a group of charging devices (RECH) comprising some or all of the charging devices of said system and during which each charging device (RECH) involved constructs a charging profile (Pr) intended to be implemented in the first mode of operation at least based on the one hand on an individual charging data item generated by the corresponding optimization module (OPT) at least from predictions of power consumption of other electrical equipment items (EQi) connected to the corresponding point of delivery for the charging time slot (PTr), and on the other hand on a coordination signal (SIGNi) generated by the coordination device (COOR) from individual charging data items generated by some or all of the charging devices (RECH) involved, and
- triggering, at a given moment, a coordinated regulation phase involving some or all of the charging devices (RECH) of the system (SYS), during which the regulation module (REG) of each of said charging devices involved in the coordinated regulation phase implements the second mode of operation, the corresponding second charging power (P2) being determined at least from a status data of the electric power supply grid determined by the coordination device from measurements, representative of a grid status, made during at least one time interval preceding said given moment.

2. System according to claim 1, wherein, during the coordinated regulation phase, the charging devices (RECH) involved are configured to implement a collective sub-mode of operation of the second mode of operation, the second mode of operation of the regulation module of each charging device (RECH) further having an individual sub-mode of operation in which the second charging power is determined independently of said status data of the electric power supply grid (R) determined by the coordination device (COOR) from measurements, representative of a status of the grid, made during a time interval preceding said given moment.

3. System according to claim 2, wherein, in the individual sub-mode of operation, the regulation module (REG) is configured to determine the second charging power (P2) at least as a function of: power consumption data (DM) of other electrical equipment items connected to the corresponding point of delivery, measured during said time slot (PTr); and the first charging power (PI) of the charging profile (Ptr).

4. System according to any one of the preceding claims, wherein, for the charging devices (RECH) involved in a coordinated optimization phase and having a charging profile (RECH) in which the charging time slot (PTr) includes the start time of the coordinated optimization phase, the charging profile determined during the coordinated optimization phase replaces said charging profile once it is determined.

5. System according to any one of the preceding claims, wherein the optimization module (OPT) of a charging device (RECH) is configured to determine the individual charging data item additionally at least from one among the following:
- a charging behavior of an electrical energy storage device (STO) of the electric vehicle that the charging device is intended to charge,
- an electrical energy requirement of the electrical energy storage device (STO) of the electric vehicle, for charging said electrical energy storage device (VE),
- an electricity pricing representative of a cost of the electrical energy to be supplied to the electrical energy storage device (STO) in order to charge it,
- an electrotechnical behavior of an electrical protection device (PROT) of the associated point of delivery (PDL),
- a maximum electric power that the charging device (RECH) is rated to deliver.

6. System according to any one of the preceding claims, wherein, for the coordinated optimization phase, each regulation module (RECH) is configured to generate the charging profile (Pr) at the end of an iterative process in which each intermediate step comprises generating a temporary individual charging data item, sending said temporary individual charging data item to the coordination device (COOR), and receiving a temporary coordination signal generated by the coordination device (COOR) based on the temporary individual charging data items from the various charging devices (RECH) involved, the temporary individual charging data item being constructed as an individual charging data item from the previous step updated based on the temporary coordination signal received during the previous step, the charging profile (Pr) being constructed from the constructed individual charging data item updated based on the coordination signal received during the last step or an intermediate step, the initial step being conducted based on the individual charging data item and the coordination signal (SIGNi).

7. System according to any one of the preceding claims, wherein the coordination device (COOR) is configured to generate the coordination signal at least from an estimate of the impact on the power grid of the individual charging data items of the charging devices involved in the coordinated optimization phase.

8. System according to any one of the preceding claims, wherein the coordination device (COOR) is configured to generate the coordination signal at least from the sum of the individual charging data items.

9. System according to any one of the preceding claims, wherein each individual charging data item is representative of a charging profile defining values of the first charging power over a charging time slot (PTr).

10. System according to any one of the preceding claims, wherein the coordination device is configured to trigger the coordinated regulation phase in response to at least one condition being satisfied of which at least one condition concerns a comparison between a capacity of a region of the electric power supply grid covering some or all of said power grid and a power consumption generated by the charging devices (SCH) and the other electrical equipment items (EQi) connected to said region.

11. System according to claim 10, wherein the charging devices (RECH) intended to be involved in said coordinated regulation phase are those connected to said region.

12. System according to any one of the preceding claims, wherein the coordination device is in the form of a device that is remote from the charging devices.

13. System according to any one of claims 1 to 11, wherein the coordination device comprises a plurality of coordination modules respectively coupled to one of the charging devices of the system, each coordination module being configured to communicate with the other charging devices (RECH) of the system and to supply the coordination signal to the charging device with which it is associated.

14. Method for charging a plurality of electric vehicles by means of a system comprising:
- a plurality of charging devices (RECH) respectively adapted to supply regulated electric power (Pout) in order to charge at least one electric vehicle (VE) with electrical energy, the charging devices being intended to be connected to an electric power supply grid (R), each charging device (RECH) being intended to be connected to said grid (R) via a point of delivery (PDL) from which the charging device is configured to draw electrical energy in order to supply said regulated electric power, each charging device (RECH) comprising:
- an optimization module (OPT) configured to construct a charging profile (Pr) associated with a charging time slot (PTr) and representative of a first charging power (PI) suitable for being supplied by the charging device during said charging time slot in order to charge the electric vehicle, and
- a regulation module (REG) adapted to regulate the electric power supplied by the charging device, the regulation module comprising:
- a first mode of operation in which the regulation module (REG) is configured to regulate the electric power (Pout) that is output in order to match said electric power (Pout) to the first charging power (PI) during at least a portion of the associated charging time slot (PTr), and
- a second mode of operation in which it is configured to regulate the electric power that is output (Pout) in order to match it to a second charging power (P2),
- a coordination device (COOR) for communicating with the charging devices (RECH),
the method being **characterized in that**:
- performing a coordinated optimization phase involving a group of charging devices (RECH) comprising some or all of the charging devices of said system and during which each charging device (RECH) involved constructs a charging profile ( Pr) intended to be implemented in the first mode of operation at least based on the one hand on an individual charging data item generated by the corresponding optimization module (OPT) at least from predictions of power consumption of other electrical equipment items (EQi) connected to the corresponding point of delivery for the charging time slot (PTr), and on the other hand on a coordination signal (SIGNi) generated by the coordination device (COOR) from individual charging data items generated by some or all of the charging devices (RECH) involved, and
- performing, at a given moment, a coordinated regulation phase involving some or all of the charging devices (RECH) of the system (SYS), during which the regulation module (REG) of each of said charging devices involved in the coordinated regulation phase implements the second mode of operation, the corresponding second charging power (P2) being determined at least from status data of the electric power supply grid determined by the coordination device from measurements, representative of a grid status, made during at least one time interval preceding said given moment.

15. Computer program comprising instructions for implementing the method according to claim 14 when executed by a processor.
